# EUROPÄISCHE PATENTSCHRIFT

(11) **EP 1 963 794 B1**
(45) Veröffentlichungstag und Bekanntmachung des Hinweises auf die Patenterteilung: **04.01.2017**
(21) Anmeldenummer: 06830199.3
(22) Anmeldetag: 29.11.2006
(51) Int. Cl.: G01F 1/84

(54) **MESSWANDLER VOM VIBRATIONSTYP**
VIBRATORY MEASURING TRANSDUCER
CONVERTISSEUR DE MESURE DU TYPE À VIBRATIONS

(30) Priorität: 22.12.2005 DE 102005062007; 22.12.2005 DE 102005062004
(43) Veröffentlichungstag der Anmeldung: 03.09.2008
(73) Patentinhaber: Endress+Hauser Flowtec AG, 4153 Reinach (CH)
(72) Erfinder: ANKLIN-IMHOF, Martin, 4143 Dornach (CH); BITTO, Ennio, 4147 Aesch (CH); HUBER, Christof, 3012 Bern (CH); LAMBRIGGER, Michael, 4056 Basel (CH); MUNDSCHIN, Dieter, 4410 Liestal (CH); SCHÜTZE, Christian, 4055 Basel (CH)
(74) Vertreter: Andres, Angelika Maria
(86) Internationale Anmeldenummer: PCT/EP2006/069077
(87) Internationale Veröffentlichungsnummer: WO 2007/074015

(56) Entgegenhaltungen:
- EP-A- 1 528 374
- US-A1- 2002 020 228
- US-A1- 2005 039 547
- US-B2- 6 666 098

## Beschreibung

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Mediums, insb. einer Flüssigkeit oder eines anderen Fluids, werden oftmals solche Meßgeräte verwendet, die mittels eines Meßwandlers vom Vibrationstyp und einer daran angeschlossener Steuer- und Auswerteelektronik, im Fluid Corioliskräfte bewirken und von diesen abgeleitet ein den Massedurchfluß repräsentierendes Meßsignal erzeugen.

Solche Meßwandler, insb. auch deren Verwendung in Coriolis-Massedurchflußmessern, sind bereits seit langem bekannt und im industriellen Einsatz. So sind z.B. in der DE-A 10 2004 023 600, der US-B 66 66 098, US-B 64 77 902, der US-A 57 05 754, der US-A 55 49 009 oder der US-A 52 87 754 Coriolis-Massedurchflußmesser mit jeweils einem Meßwandler vom Vibrationstyp beschrieben, welcher Meßwandler auf einen Massedurchfluß eines in einer Rohrleitung strömenden Mediums reagiert, und welcher Meßwandler ein Wandler-Gehäuse sowie ein im Wandler-Gehäuse angeordnetes Innenteil umfaßt. Das Innenteil weist zumindest ein gekrümmtes, im Betrieb zumindest zeitweise vibrierendes Meßrohr zum Führen des Mediums, sowie einen unter Bildung einer ersten Kopplungszone einlaßseitig am Meßrohr und unter Bildung einer zweiten Kopplungszone auslaßseitig am Meßrohr fixierten Gegenschwinger auf, der im Betrieb im wesentlichen ruht oder zum Meßrohr gegengleich, also gleichfrequent und gegenphasig, oszilliert. Das Innenteil ist ferner zumindest mittels zweier Verbindungsrohrstücke im Wandler-Gehäuse schwingfähig gehaltert, über die das Meßrohr im Betrieb mit der Rohrleitung kommuniziert.

Gekrümmte, z.B. U-, V- oder W-artig geformte, vibrierende Meßrohre können bekanntlich, angeregt zu Biegeschwingungen gemäß einer ersten Eigenschwingungsform, im hindurchströmenden Medium Corioliskräfte bewirken. Als erste Eigenschwingungsform des Meßrohrs wird bei derartigen Meßwandlern üblicherweise jene Eigenschwingungsform gewährt, bei denen das Meßrohr bei einer niedrigsten natürlichen Resonanzfrequenz um eine gedachte Längsachse des Meßwandlers nach Art eines endseitig eingespannten Auslegers pendelt. Die so im hindurchströmenden Medium erzeugten Corioliskräfte wiederum führen dazu, daß den angeregten, pendelartigen Auslegerschwingungen des sogenannten Nutzmodes Biegeschwingungen gemäß wenigstens einer zweiten Eigenschwingungsform gleichfrequent überlagert werden. Bei Meßwandlern der beschriebenen Art entsprechen diese durch Corioliskräfte erzwungenen Auslegerschwingungen, dem sogenannten Coriolismode, üblicherweise jener Eigenschwingungsform, bei denen das Meßrohr auch Drehschwingungen um eine senkrecht zur Längsachse ausgerichtete gedachte Hochachse ausführt. Aufgrund der Überlagerung von Nutz- und Coriolismode weisen die mittels der Sensoranordnung einlaßseitig und auslaßseitig erfaßten Schwingungen des Meßrohrs eine auch vom Massedurchfluß abhängige, meßbare Phasendifferenz auf.

Häufig werden die Meßrohre derartiger, z.B. in Coriolis-Massedurchflußmessern eingesetzte, Meßwandler im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann z.B. mittels marktüblicher Coriolis-Massedurchflußmesser neben dem Massedurchfluß auch die Dichte von strömenden Fluiden gemessen werden.

Ein Vorteil einer gekrümmten Rohrform besteht z.B. darin, daß aufgrund thermisch bedingter Ausdehnungen, insb. auch bei der Verwendung von Meßrohren mit einem hohen Ausdehnungskoeffizienten, praktisch keine oder nur sehr gerinfügige mechanische Spannungen im Meßrohr selbst und/oder in der angeschlossenen Rohrleitung hervorgerufen werden. Ein weiterer Vorteil gekrümmter Meßrohre ist aber auch darin zu sehen, daß das Meßrohr relativ lang ausgeführt und somit eine hohe Empfindlichkeit des Meßwandlers auf den zu messenden Massedurchfluß bei einer relativ kurzen Einbaulänge und bei relativ niedriger Erregerenergie erzielt werden kann. Diese Umstände ermöglichen es, das Meßrohr auch aus Materialien mit einem hohen Ausdehnungskoeffizienten und/oder hohen Elastizitätsmodul, wie z.B. Edelstahl, herzustellen. Im Vergleich dazu wird bei Meßwandlern vom Vibrations-Typ mit geradem Meßrohr, letzteres zur Vermeidung von axialen Spannungen und zur Erzielung einer ausreichenden Meßempfindlichkeit üblicherweise aus einem Material gefertigt, das zumindest einen niedrigeren Ausdehnungskoeffizienten und ggf. auch einen niedrigeren Elastizitätsmodul als Edelstahl aufweist. Daher werden für diesen Fall bevorzugt Meßrohre aus Titan oder Zirkonium verwendet, die jedoch aufgrund des höheren Materialpreises und des üblicherweise auch höheren Bearbeitungsaufwands weitaus teurer als die aus Edelstahl gefertigten sind. Zudem weist ein Meßwandler mit einem einzigen Meßrohr gegenüber einem mit zwei parallel durchströmten Meßrohren bekanntlich den weiteren großen Vorteil auf, daß dem Verbinden der Meßrohre mit der Rohrleitung dienende Verteilerstücke nicht erforderlich sind. Solche Verteilerstücke sind zum einen aufwendig zu fertigen und zum anderen stellen sie auch Strömungskörper mit einer ausgeprägten Neigung zur Ansatzbildung oder zum Verstopfen dar.

Aufgrund der im Nutzmode zumeist eher schmalen Bandbreite von Gegenschwingern weisen Meßwandler mit einem einzigen gekrümmten Meßrohr bei Anwendung mit in einem weiten Bereich schwankender Mediumsdichte allerdings oftmals den Nachteil auf, insb. auch im Vergleich zu solchen Meßwandlern mit zwei parallelen Meßrohren, daß infolge von mit der Dichte schwankender Imbalance des Innenteils der Nullpunkt des Meßwandler und somit auch die Meßgenauigkeit des jeweiligen In-Line-Meßgeräts gleichermaßen erheblich schwanken und insoweit entsprechend verringert sein kann. Dies liegt u.a. darin begründet, daß auch mittels des im allgemeinen einzigen Gegenschwingers solche Querkräfte nur unvollständig zu neutralisieren und somit von der angeschlossenen Rohrleitung weitgehend fern gehalten werden können, die aufgrund wechselseitiger lateraler Bewegungen des Mediums führenden einzigen Meßrohrs im Meßwandler induziert werden, und die infolge stark schwankender Mediumsdichte im Vergleich zu den seitens des Gegenschwingers aufbringbaren Gegenkräften eher breitbandig sind. Solch residuale Querkräfte wiederum können dazu führen, daß das oben erwähnte Innenteil, gesamtheitlich um die Längsachse des Meßwandlers pendelnd, auch lateral zu schwingen beginnt. Diese lateralen Schwingungen des Innenteils erzwingen dementsprechend auch eine zusätzliche elastische Verformung des Verbindungsrohrstücks und können so folglich auch in der angeschlossenen Rohrleitung unerwünschte Vibrationen bewirken. Außerdem können aufgrund solcher lateraler Schwingungen des Innenteils auch im nicht von Fluid durchströmten Meßrohr dem Coriolismode sehr ähnliche, jedenfalls aber gleichfrequente und somit von diesem praktisch nicht unterscheidbare Auslegerschwingungen angestoßen werden, was wiederum das eigentlich den Massedurchfluß repräsentierende Meßsignal unbrauchbar machen würde.

Dies zeigt sich auch bei Meßwandlern, die gemäß dem beispielsweise in der US-A 57 05 754 oder der US-A 52 87 754 vorgeschlagenen Prinzip realisiert sind. Bei dort beschriebenen Meßwandlern werden die seitens des vibrierenden einzigen Meßrohrs erzeugten, eher mittel- oder hochfrequent oszillierenden Querkräfte mittels eines einzigen, im Vergleich zum Meßrohr eher schweren, gleichwohl aber im Vergleich zum Meßrohr eher hochfrequent abgestimmten Gegenschwingers und ggf. einer relativ weichen Ankopplung des Meßrohrs an die Rohrleitung, also praktisch mittels eines mechanischen Tiefpasses, von der Rohrleitung, fernzuhalten gesucht. Ungünstigerweise steigt hierbei jedoch die zur Erzielung einer ausreichend robusten Dämpfung der Querkräfte erforderliche Masse des Gegenschwingers überproportional mit der Nennweite des Meßrohrs. Dies stellt einen großen Nachteil für solche Meßwandler hoher Nennweite dar, da eine Verwendung solch massiger Bauteile nämlich stets einen erhöhten Montageaufwand sowohl bei der Fertigung als auch beim Einbau des Meßgeräts in die Rohrleitung bedeutet. Außerdem läßt es sich hierbei nur noch sehr aufwendig sicherstellen, daß die mit zunehmender Masse ja auch immer niedriger werdende kleinste Eigenfrequenz des Meßwandlers nach wie vor weitab von den ebenfalls eher niedrigen Eigenfrequenzen der angeschlossenen Rohrleitung liegt. Somit ist eine Verwendung eines derartigen Meßwandlers in industriell einsetzbaren In-Line-Meßgeräten der beschriebenen Art, beispielsweise Coriolis-Massedurchflußmeßgeräten, bislang eher auf relativ geringe Meßrohr-Meßrohr-Nennweiten bis etwa 10 mm begrenzt. Meßwandler der vorbeschriebenen Art werden im übrigen auch seitens der Anmelderin selbst mit der Serienbezeichnung "PROMASS A" für einen nominellen Nennweitenbereich von 1 - 4 mm am Markt angeboten und haben sich dort im besonderen auch bei Anwendungen mit sehr niedrigen Durchflußraten und/oder hohem Druck bewährt.

Demgegenüber sind bei den in der US-B 66 66 098, der US-B 64 77 902, oder der 55 49 009 gezeigten Meßwandlern die beiden - hier im wesentlichen geraden - Verbindungsrohrstücke zueinander sowie zu einer gedachten Längsachse des Meßwandlers so ausgerichtet, daß das mittels Meßrohr und Gegenschwinger sowie der daran entsprechend angebrachten Schwingungserregern und Schwingungssensoren gebildete Innenteil im Betrieb um die Längsachse pendeln kann. Anders gesagt, kann das gesamte Innenteil im Betrieb Pendelschwingungen, bedingt durch, insb. dichteabhängige, Inbalancen zwischen Meßrohr 10 und Gegenschwinger 20, um die Längsachse L ausführen, die, je nach Ausprägung der Inbalance zu den Auslegerschwingungen des Meßrohrs 10 oder zu denen des Gegenschwingers 20 gleichphasig sind. Dabei sind die Torsionssteifigkeiten der Verbindungsrohrstücke vorzugsweise so aufeinander und auf das von beiden getragene Innenteil abgestimmt, daß letzteres im wesentlichen drehweich um die Längsachse aufgehängt ist.

Dies wird bei dem in der der US-B 66 66 098 beispielsweise dadurch erreicht, daß die Torsionssteifigkeit der Verbindungsrohrstücke so bemessen ist, daß eine jeweilige Eigenfrequenz eines einlaßseitigen und eines auslaßseitigen Torsionsschwingers, der mittels des jeweiligen Verbindungsrohrstücks und einem zugehörigen, als weitgehend starr und im wesentlichen formstabil anzusehenden, um die Längsachse drehschwingenden endseitigen Massenanteil des Innenteils inhärent gebildet ist, jeweils im Bereich der Schwingungsfrequenz des im Nutzmode schwingenden Meßrohrs liegt. Zudem sind zumindest bei dem in der US-B 66 66 098 vorgeschlagenen Meßwandler Meßrohr und Gegenschwinger so aufeinander abgestimmt, daß sie zumindest im Nutzmode in etwa auf gleicher Resonanzfrequenz schwingen. Meßwandler der vorbeschriebenen Art werden im übrigen auch seitens der Anmelderin selbst mit der Serienbezeichnung "PROMASS H" für einen nominellen Nennweitenbereich von 8 - 50 mm am Markt angeboten und haben sich dort im besonderen auch bei Anwendungen mit im Betrieb in erheblichem Maße veränderlicher Mediumsdichte bewährt. Die Pendelbewegung des Innenteils wird dadurch besonders ausgeprägt oder zumindest begünstigt, daß sowohl ein von der gedachten Längsachse beabstandeter Massenschwerpunkt des Meßrohrs als auch ein von der gedachten Längsachse beabstandeter Massenschwerpunkt des Gegenschwingers in einem gemeinsamen von der gedachten Längsachse und dem Meßrohr aufgespannten Bereich des Meßwandlers liegen. Weiterführende haben Untersuchungen inzwischen gezeigt, daß der Nullpunkt von Meßwandlern der vorgenannten Art bei sehr kleinen Massendurchflußraten und Medien mit einer von der kalibrierten Referenzdichte erheblich abweichenden Dichte nach wie vor erheblichen Schwankungen unterliegen kann. Experimentelle Untersuchungen an gemäß der US-B 66 66 098 konfigurierten Meßwandlern, bei denen - wie vorgeschlagen - ein vergleichsweise schwerer Gegenschwinger verwendet worden ist, haben zwar erkennen lassen, daß so durchaus eine gewisse Verbesserung der Nullpunktstabilität und insoweit eine Verbesserung der Meßgenauigkeit von In-Line-Meßgeräten der beschriebenen Art erzielbar wäre, allerdings nur in eher unzureichendem Maße. Allenfalls ist bei den in der der US-B 66 66 098 vorgeschlagenen Konfigurationen eine signifikante Verbesserung der Meßgenauigkeit praktisch nur unter Inkaufnahme der bezüglich der US-A 57 05 754 oder der US-A 52 87 754 bereits diskutierten Nachteile erzielbar.

Als nachteilig für allfällige Verbesserungen der dynamischen Schwingungseigenschaften hat sich bei dem in der US-B 66 66 098 gezeigten Meßwandlern zudem der eher komplizierte Aufbau des Innenteils gezeigt. Dies im besonderen deshalb, weil es aus einer Vielzahl von als Zusatzmassen dienenden zusätzlichen Einzelkomponenten besteht, die aufwendig zu fertigen und auch entsprechend aufwendig zu montieren sind. Diese Einzelkomponenten dienen dabei praktisch ausschließlich der Einstellung von Massen und/oder Massenverteilung des Innenteils und insoweit praktisch nur als Blindmasse.

Ein Aufgabe der Erfindung besteht daher darin, den mechanischen Aufbau von Meßwandlern der vorgenannten Art dahingehend zu verbessern, daß deren jeweiliges Innenteil aus vergleichsweise wenigen Einzelkomponenten aufgebaut werden kann und insoweit eine geringe Komplexität aufweist. Trotzdem soll ermöglicht werden, daß der entsprechende Meßaufnehmer einerseits über einen weiten Mediumsdichtebereich dynamisch gut ausbalanciert und anderseits trotzdem im Vergleich zu den in der US-A 57 05 754 oder der US-A 52 87 754 vorgeschlagen Meßwandlern von geringerer Masse ist. Im besonderen soll dabei das in der US-B 66 66 098 vorgeschlagene Kompensationsprinzip mit den im wesentlichen auf die Nutzfrequenz des Meßrohrs abgestimmten endseitigen inhärenten Torsionsschwingern und auf Nutzfrequenz abgestimmtem Gegenschwinger nach wie vor wirksam angewendet werden können.

Zur Lösung der Aufgabe besteht die Erfindung in einem Meßwandler vom Vibrationstyp für ein in einer Rohrleitung strömendes Medium. Der Meßwandler umfaßt ein Wandler-Gehäuse sowie ein im Wandler-Gehäuse angeordnetes Innenteil. Das Innenteil weist zumindest ein gekrümmtes, im Betrieb zumindest zeitweise vibrierendes Meßrohr zum Führen des Mediums, sowie einen unter Bildung einer ersten Kopplungszone einlaßseitig am Meßrohr und unter Bildung einer zweiten Kopplungszone auslaßseitig am Meßrohr fixierten Gegenschwinger auf, und ist zumindest mittels zweier Verbindungsrohrstücke im Wandler-Gehäuse schwingfähig gehaltert. Die wenigstens zwei Verbindungsrohrstücke, über die das Meßrohr zudem im Betrieb mit der Rohrleitung kommuniziert, sind zueinander sowie zu einer gedachten Längsachse des Meßwandlers so ausgerichtet sind, daß das Innenteil im Betrieb um die Längsachse L pendeln kann. Desweiteren ist vorgesehen, daß der Gegenschwinger mittels seitlich des Meßrohrs angeordneter Gegenschwinger-Platten gebildet ist, und daß der Gegenschwinger mittels wenigstens zweier Gegenschwinger-Platten gebildet ist, von denen eine erste Gegenschwinger-Platte linksseitig des Meßrohrs und eine zweite Gegenschwinger-Platte rechtsseitig des Meßrohrs angeordnet sind, wobei jede der wenigstens zwei Gegenschwinger-Platten eine bogen- oder bügelförmige Kontur aufweist. Darüberhinaus ist ferner vorgesehen, daß der Gegenschwinger eine Masse aufweist, die größer ist als eine Masse des Meßrohrs, wobei ein Verhältnis der Masse des Gegenschwingers zur Masse des Meßrohrs größer als zwei ist, und daß Meßrohr und Gegenschwinger so ausgebildet und zueinander ausgerichtet sind, daß sowohl ein von der gedachten Längsachse beabstandeter Massenschwerpunkt des Meßrohrs als auch ein von der gedachten Längsachse beabstandeter Massenschwerpunkt des Gegenschwingers in einem gemeinsamen von der gedachten Längsachse und dem Meßrohr aufgespannten Bereich des Meßwandlers liegen. Zudem weist das im Wandler-Gehäuse schwingfähig gehalterte Innenteil sowohl einen Pendelschwingungsmode, in dem es im Betrieb, einhergehend mit Verformungen der beiden Verbindungsrohrstücke, zumindest zeitweise um die gedachte Längsachse pendelt, als auch einen natürlichen Lateralschwingungsmode, in dem es im Betrieb, einhergehend mit Verformungen der beiden Verbindungsrohrstücke, zumindest zeitweise relativ zum Wandler-Gehäuse und lateral um die Längsachse schwingt, auf, wobei der Lateralschwingungsmode des Innenteils eine niedrigste Eigenfrequenz aufweist, die größer ist als eine niedrigste Eigenfrequenz des Pendelschwingungsmode des Innenteils, derart, daß ein Verhältnis der niedrigsten Eigenfrequenz des Lateralschwingungsmodes des Innenteils zur niedrigsten Eigenfrequenz des Pendelschwingungsmodes des Innenteils größer als 1,2 ist.

Nach einer ersten Ausgestaltung der Erfindung ist vorgesehen, daß jeder der vorgenannten Massenschwerpunkte einen Abstand zur gedachten Längsachse aufweist, der größer als 30 mm ist und/oder daß ein Verhältnis des Abstands eines jeden der vorgenannten Massenschwerpunkte zu einem Durchmesser des Meßrohrs jeweils größer als eins ist. Insbesondere kann das Verhältnis des Abstands eines jeden der vorgenannten Massenschwerpunkte zu einem Durchmesser des Meßrohrs jeweils größer als zwei ist und kleiner als zehn gehalten sein.

Nach einer zweiten Ausgestaltung der Erfindung ist vorgesehen, daß jede der wenigstens zwei Gegenschwinger-Platten eine äußere Seitenfläche aufweist, von der ein erster Rand durch eine bezüglich der Längsachse distale Kontur gebende Kante sowie ein zweiter Rand von einer bezüglich der Längsachse proximale Kontur gebende Kante gebildet ist. Nach einer Weiterbildung dieser Ausgestaltung der Erfindung ist vorgesehen, daß jede der wenigstens zwei Gegenschwinger-Platten so ausgebildet und im Meßwandler plaziert ist, daß sowohl die distale als auch die proximale Kontur gebende Kante eines jeden der wenigstens zwei Gegenschwinger-Platten zumindest im Bereich eines Mittelabschnitts des Gegenschwingers einen von Null verschiedenen Abstand zur Längsachse aufweisen. Dabei kann jede der wenigstens zwei Gegenschwinger-Platten so ausgebildet sein, daß zumindest im Bereich eines Mittelabschnitts des Gegenschwingers eine örtliche Platten-Höhe jeweils kleiner ist als jeweils im Bereich der beiden Kopplungszonen, wobei die örtliche Platten-Höhe daselbst jeweils einem kleinsten Abstand zwischen der distalen und der proximalen Kontur gebende Kante eines jeden der wenigstens zwei Gegenschwinger-Platten entspricht. Ferner ist vorgesehen, daß jede der wenigstens zwei Gegenschwinger-Platten so ausgebildet ist, daß sie im Bereich des Mittelabschnitts des Gegenschwingers eine kleinste Platten-Höhe aufweist und/oder daß die Platten-Höhe eines jeden der wenigstens zwei Gegenschwinger-Platten jeweils ausgehend von einer Kopplungszone zum Mittelabschnitt des Gegenschwingers hin, insb. monoton oder kontinuierlich, abnimmt.

Nach einer dritten Ausgestaltung der Erfindung ist vorgesehen, daß jede der wenigstens zwei den Gegenschwinger bildenden Platten im wesentlichen parallel zum Meßrohr angeordnet ist.

Nach einer vierten Ausgestaltung der Erfindung ist vorgesehen, daß ein Durchmesser des Meßrohrs größer als 1 mm und kleiner als 100 mm ist.

Nach einer fünften Ausgestaltung der Erfindung ist vorgesehen, daß die Längsachse des Meßwandlers die beiden Kopplungszonen miteinander imaginär verbindet.

Nach einer sechsten Ausgestaltung der Erfindung ist vorgesehen, daß das Meßrohr im wesentlichen U-förmig oder V-förmig ausgebildet ist.

Nach einer siebenten Ausgestaltung der Erfindung ist vorgesehen, daß Meßrohr und Gegenschwinger einlaßseitig mittels wenigstens eines ersten Kopplers und auslaßseitig mittels wenigstens eines zweiten Kopplers miteinander mechanisch verbunden sind.

Nach einer achten Ausgestaltung der Erfindung ist vorgesehen, daß die Verbindungsrohrstücke im wesentlichen gerade Rohrsegmente aufweisen. Nach einer Weiterbildung dieser Ausgestaltung der Erfindung ist vorgesehen, daß die Verbindungsrohrstücke so zueinander ausgerichtet sind, daß die Rohrsegmente im wesentlichen parallel zur gedachten Längsachse verlaufen. Dabei können die Verbindungsrohrstücke so zueinander ausgerichtet sein, daß die im wesentlichen geraden Rohrsegmente zueinander und/oder mit der gedachten Längsachse im wesentlichen fluchten.

Nach einer neunten Ausgestaltung der Erfindung ist vorgesehen, daß das Meßrohr im Betrieb zumindest zeitweise Biegeschwingungen relativ zu Gegenschwinger und Längsachse ausführt.

Nach einer zehnten Ausgestaltung der Erfindung ist vorgesehen, daß Meßrohr und Gegenschwinger im Betrieb zumindest zeitweise und zumindest anteilig gleichfrequente Biegeschwingungen um die Längsachse ausführen. Gemäß einer Weiterbildung dieser Ausgestaltung der Erfindung ist ferner vorgesehen, daß dies solche Biegeschwingungen um die Längsachse sind, die zumindest anteilig zueinander außerphasig, insb. im wesentlichen gegenphasig, sind.

Nach einer elften Ausgestaltung der Erfindung ist vorgesehen, daß das im Wandler-Gehäuse schwingfähig gehalterte Innenteil einen natürlichen Lateralschwingungsmode aufweist, in dem es im Betrieb, einhergehend mit Verformungen der beiden Verbindungsrohrstücke, zumindest zeitweise relativ zum Wandler-Gehäuse und lateral um die Längsachse schwingt.

Nach einer zwölften Ausgestaltung der Erfindung ist vorgesehen, daß das im Wandler-Gehäuse schwingfähig gehalterte Innenteil einen Pendelschwingungsmode aufweist, in dem es im Betrieb, einhergehend mit Verformungen der beiden Verbindungsrohrstücke, zumindest zeitweise um die gedachte Längsachse pendelt. Gemäß einer Weiterbildung dieser Ausgestaltung der Erfindung ist ferner vorgesehen, daß zumindest eine natürliche Eigenfrequenz des Pendelschwingungsmodes kleiner ist als eine niedrigste Schwingungsfrequenz, mit der das Meßrohr momentan vibriert und/oder daß zumindest eine momentane natürliche Eigenfrequenz des Pendelschwingungsmodes stets kleiner ist als eine momentan niedrigste natürliche Eigenfrequenz des Meßrohrs.

Nach einer dreizehnten Ausgestaltung der Erfindung ist vorgesehen, daß das im Wandler-Gehäuse schwingfähig gehalterte Innenteil einen Pendelschwingungsmode aufweist, in dem es im Betrieb, einhergehend mit Verformungen der beiden Verbindungsrohrstücke, zumindest zeitweise um die gedachte Längsachse pendelt, und daß zumindest eine natürliche Eigenfrequenz des Pendelschwingungsmodes des Innenteils kleiner ist als eine niedrigste Schwingungsfrequenz ist, mit der das Meßrohr momentan vibriert, und/oder daß zumindest eine momentane natürliche Eigenfrequenz des Pendelschwingungsmodes des Innenteils stets kleiner ist als eine momentan niedrigste natürliche Eigenfrequenz des Meßrohrs. Nach einer Weiterbildung dieser Ausgestaltung der Erfindung ist vorgesehen, daß ein Verhältnis der niedrigsten Eigenfrequenz des Meßrohrs zur niedrigsten Eigenfrequenz des Pendelschwingungsmodes des Innenteils größer als 3 ist und/oder kleiner als 20 ist. Insbesondere kann das Verhältnis der niedrigsten Eigenfrequenz des Meßrohrs zur niedrigsten Eigenfrequenz des Pendelschwingungsmodes des Innenteils dabei größer als 5 und kleiner als 10 gehalten sein.

Nach einer vierzehnten Ausgestaltung der Erfindung ist vorgesehen, daß das Verhältnis der niedrigsten Eigenfrequenz des Lateralschwingungsmodes des Innenteils zur niedrigsten Eigenfrequenz des Pendelschwingungsmodes des Innenteils kleiner als 10 ist. Insbesondere kann vorgenanntes Verhältnis der niedrigsten Eigenfrequenz des Lateralschwingungsmodes des Innenteils zur niedrigsten Eigenfrequenz des Pendelschwingungsmodes des Innenteils dabei größer als 1,5 und kleiner als 5 gehalten sein.

Nach einer fünfzehnten Ausgestaltung des erfindungsgemäßen Meßwandlers umfaßt dieser weiters eine Erregeranordnung zum Vibrierenlassen von Meßrohr und Gegenschwinger.

Nach einer sechzehnten Ausgestaltung des erfindungsgemäßen Meßwandlers umfaßt dieser weiters eine Sensoranordnung zum Erfassen von Schwingungen zumindest des Meßrohrs. Nach einer Weiterbildung dieser Ausgestaltung der Erfindung ist vorgesehen, daß die Sensoranordnung zum Erfassen von Schwingungen des Meßrohrs wenigstens einen einlaßseitig am Meßrohr angeordneten ersten Sensor sowie einen auslaßseitig am Meßrohr angeordneten zweiten Sensor umfaßt. Zudem kann es von Vorteil sein, wenn die Sensoranordnung zum Erfassen von Schwingungen des Meßrohrs weiters wenigstens einen einlaßseitig am Meßrohr angeordneten dritten Sensor sowie einen auslaßseitig am Meßrohr angeordneten vierten Sensor umfaßt. Dies im besonderen auch dann, wenn der erste Sensor gegenüberliegend dem dritten Sensor und der zweite Sensor gegenüberliegend dem vierten Sensor am Meßrohr angeordnet sind.

Ein Grundgedanke der Erfindung ist es, insb. auch im Gegensatz zu den in der US-B 66 66 098 gezeigten Meßwandlern, den Gegenschwinger aus seitlich des Meßrohrs angeordneten Platten aufzubauen und durch eine geeignete Formgebung sowohl eine Abstimmung des Gegenschwingers auf die Nutzfrequenz des Meßrohrs als auch die für den in der US-B 66 66 098 vorgeschlagenen Entkopplungsmechanismus erforderlichen Massen, Massenverteilungen und Massenträgheitsmomente um die Längsachse zu ermöglichen. Des weiteren können, insb. aufgrund der Verwendung von Gegenschwinger-Platten mit im wesentlichen bügelförmiger Kontur einerseits und sich zur Mitte hin verjüngenden Plattenhöhe anderseits, der Gegenschwinger und insoweit auch das Innenteil sehr einfach sowohl hinsichtlich der Massenverteilungen als auch davon weitgehend unabhängig hinsichtlich der oben genannten Eigenfrequenzen eingestellt werden. Darüber hinaus können so auch die für den Entkopplungsmechanismus erforderlichen endseitigen Torsionsschwinger als integraler Bestandteil des Innenteils ausgebildet und dabei von den vorgenannten Kriterien weitgehend unabhängig abgestimmt werden.

Infolgedessen kann das in der US-B 66 66 098 vorgeschlagenen Kompensationsprinzip nicht nur weiterhin umgesetzt, sondern auch dahingehend weiter verbessert werden, daß der Gegenschwinger nicht nur etwas schwerer, sondern im besonderen auch etwas bieg- und verwindungssteifer ausgebildet werden kann. Ferner konnte bereits bei einem vergleichsweise geringen Massezuwachs in der Größenordnung von etwa 10% gegenüber dem eingangs erwähnten Meßwandler vom Typ "PROMASS H" eine Verbesserung der Empfindlichkeit von mehr als 50% und insoweit auch eine entsprechende Verbesserung der Meßgenauigkeit erzielt werden. Im besonderen konnte neben der Verbesserung der dichteabhängigen Nullpunktbeeinflußbarkeit auch bei großer Abweichung von der kalibrierten Referenzdichte des Meßwandlers auch eine erhebliche Verbesserung der Meßgenauigkeit des In-Line-Meßgeräts bei kleinen Durchflußraten festgestellt werden.

Der erfindungsgemäße Meßwandler zeichnet sich des weiteren dadurch aus, daß bei Verwendung eines Gegenschwingers der vorbeschriebenen Art mit entsprechend hoher Masse die beiden Verbindungsrohrstücke ohne weiteres entsprechend kurz gehalten und somit auch eine Einbaulänge des Meßwandlers insgesamt, bei einer im wesentlichen gleichbleibend hohen Güte der dynamischen Schwingungsentkopplung, erheblich verringert werden können. Außerdem kann der Meßwandler trotz seiner kurzen Einbaulänge nach wie vor vergleichsweise leicht ausgeführt werden.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
Fig. 1a, bzeigen ein In-Line-Meßgerät für in Rohrleitungen strömende Medien in verschiedenen Seitenansichten;
Fig. 2 zeigt teilweise geschnitten in perspektivischer Ansicht einen für ein In-Line-Meßgerät gemäß den Fig. 1a, 1b geeigneten Meßwandler vom Vibrations-Typ; und
Fig. 3 und 4 zeigen den Meßwandler gemäß den Fig. 2 teilweise geschnitten in verschiedenen Seitenansichten.

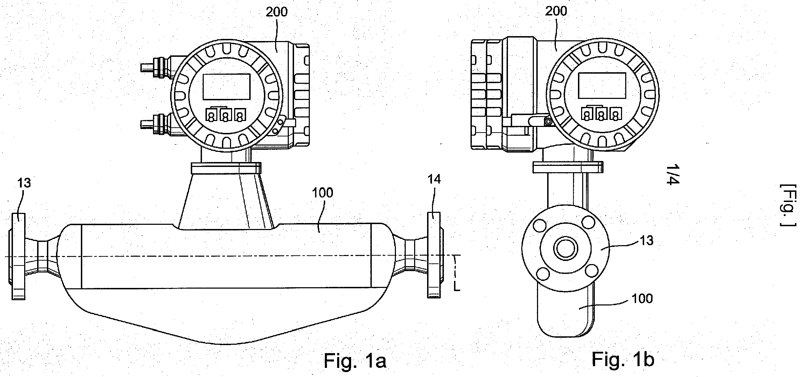

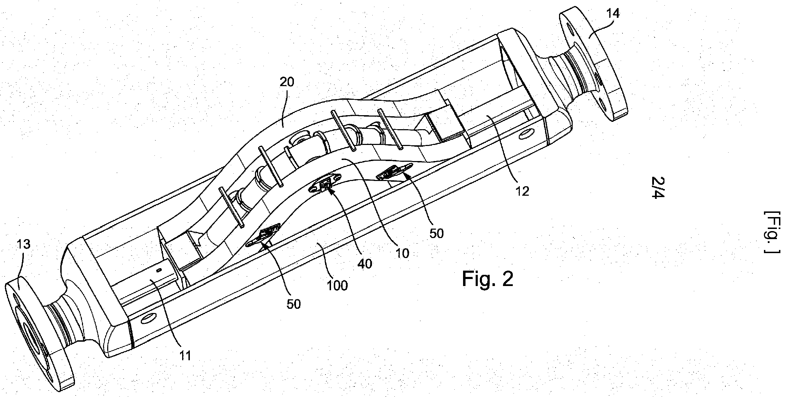

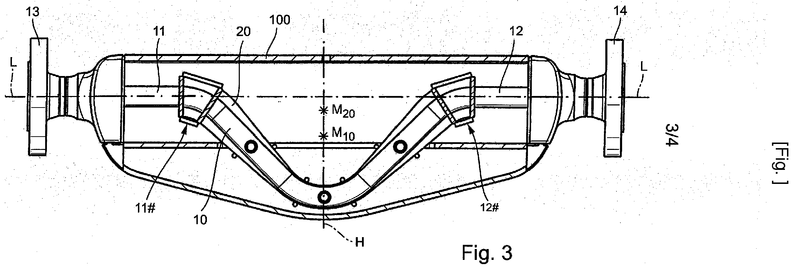

In den Fig. 1a, b ist ein in eine Rohrleitung beispielsweise eine Prozeßleitung einer industriellen Anlage, einfügbares, beispielsweise als Coriolis-Massendurchflußmeßgerät, Dichtemeßgerät, Viskositätsmeßgerät oder dergleichen ausgebildetes, In-Line-Meßgerät dargestellt, das dem Messen und/oder Überwachen wenigstens eines Parameters, beispielsweise einem Massendurchfluß, einer Dichte, einer Viskosität etc, eines in der Rohrleitung strömenden Mediums dient. Das In-Line-Meßgerät umfaßt dafür einen Meßwandler vom Vibrationstyp der im Betrieb entsprechend vom zu messenden Medium durchströmt ist. In den Fig. 2 und 3 ist ein entsprechendes Ausführungsbeispiel für einen solchen Meßwandler vom Vibrationstyp schematisch dargestellt. Darüber hinaus sind der prinzipielle mechanische Aufbau sowie dessen Wirkungsweise mit den denen der in den US-B 66 66 098 gezeigten Meßwandler durchaus vergleichbar. Der Meßwandler dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. ein Massedurchfluß m, eine Dichte *r* und/oder eine Viskosität *h* des Mediums gemessen werden. Der Meßwandler umfaßt dafür ein Wandler-Gehäuse 100 sowie ein im Wandler-Gehäuse 100 angeordnetes, die physikalisch-elektrische Konvertierung des wenigstens einen zu messenden Parameters eigentlich bewirkendes Innenteil.

Zum Führen des Mediums umfaßt das Innenteil ein - hier einziges - gekrümmtes Meßrohr 10, das im Betrieb vibrieren gelassen und dabei, um eine statische Ruhelage oszillierend, wiederholt elastisch verformt wird. Das Meßrohr 10 und insoweit auch eine innerhalb von Lumen imaginär verlaufende Schwerelinie des Meßrohrs 10 können beispielsweise im wesentlichen W-, U-förmig oder wie in der Fig. 2 gezeigt im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweis, der im bereich zwischen etwa 1 mm und etwa 100 mm liegt.

Zur Minimierung von auf das Meßrohr 10 wirkenden Störeinflüssen wie auch zur Reduzierung von seitens des Meßwandlers an die angeschlossene Rohrleitung abgegebener Schwingungsenergie ist im Meßwandler des weiteren ein Gegenschwinger 20 vorgesehen. Dieser ist, wie auch in Fig. 2 gezeigt, vom Meßrohr 10 seitlich beabstandet im Meßwandler angeordnet und unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der - im gezeigten Ausführungsbeispiel im wesentlichen parallel zum Meßrohr 10 verlaufende, ggf. auch koaxial zu diesem angeordnete - Gegenschwinger 20 kann beispielsweise rohrförmig oder auch im wesentlichen kastenförmig. auch ausgeführt sein. Für letzteren Fall kann der Gegenschwinger 20 - wie auch in Fig. 2 dargestellt - beispielsweise mittels links- und rechtsseitig des Meßrohrs 10 angeordneten Platten gebildet sein.

Wie aus einer Zusammenschau der der Fig. 1Fign. 2 und 3 ersichtlich, ist der Gegenschwinger 20 mittels wenigstens eines einlaßseitigen ersten Kopplers 31 am Einlaßende 11# des Meßrohrs 10 und mittels wenigstens eines auslaßseitigen, insb. zum Koppler 31 im wesentlichen identischen, zweiten Kopplers 32 am Auslaßende 12# des Meßrohrs 10 gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in hier gezeigten Ausführungsbeispiel vorgeschlagen - ein mittels in Richtung der Längsachse voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen.

Zum Hindurchströmenlassen des zu messenden Mediums ist das Meßrohr 10 ferner über ein einlaßseitig im Bereich der ersten Kopplungszone 11# einmündendes erstes Verbindungsrohrstück 11 und über ein auslaßseitig im Bereich der zweiten Kopplungszone 12# einmündendes, insb. zum ersten Verbindungsrohrstück 11 im wesentlichen identisches, zweites Verbindungrohrstück 12 entsprechend an die das Medium zu- bzw. abführende - hier nicht dargestellte - Rohrleitung angeschlossen, wobei jedes der beiden Verbindungsrohrstücke 11, 12 Rohrsegmente aufweisen, die im wesentlichen gerade sind. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßrohrs 10 kann im übrigen praktisch jedes der für solche Meßwandler üblichen Materialien, wie z.B. Stahl, Hastelloy, Titan, Zirkonium, Tantal etc, verwendet werden.

Wie inder
Fig. 1 den Fig. 2 und 3 ferner dargestellt, ist das, insb. im Vergleich zum Meßrohr 10 biege- und torsionssteifes, Wandlergehäuse 100, insb. starr, an einem bezüglich der ersten Kopplungszone #11 distalen Einlaßende des einlaßseitigen Verbindungsrohrstücks 11 sowie an einem bezüglich der ersten Kopplungszone #11 distalen Auslaßende des auslaßseitigen Verbindungsrohrstück 12 fixiert. Insoweit ist also das gesamte Innenteil nicht nur vom Wandlergehäuse 100 vollständig umhüllt, sondern infolge seiner Eigenmasse und der Federwirkung beider Verbindungsrohrstücke 11, 12 im Wandler-Gehäuse 100 auch schwingfähig gehaltert. Zusätzlich zur Aufnahme des Innenteils kann das Wandlergehäuse 100 zudem auch dazu dienen, ein Elektronikgehäuse 200 des In-line-Meßgeräts mit darin untergebrachter Meßgerät-Elektronik zu haltern. Für den Fall, daß der Meßwandler lösbaren mit der Rohrleitung zu montieren ist, ist ferner dem einlaßseitigen Verbindungsrohrstück 11 an einem Einlaßende ein erster Flansch 13 und dem auslaßseitigen Verbindungsrohrstück 12 an einem Auslaßende ein zweiter Flansch 14 angeformt. Die Flansche 13, 14 können dabei, wie bei Meßwandlern der beschriebenen Art durchaus üblich auch zumindest teilweise endseitig in das Wandlergehäuse 100 integriert sein. Falls erforderlich können die Verbindungsrohrstücke 11, 12 im übrigen aber auch direkt mit der Rohrleitung, z.B. mittels Schweißen oder Hartlötung, verbunden werden.

Im Betrieb des Meßwandlers wird das Meßrohr 10, wie bei derartigen Meßwandlern vom Vibrations-Typ üblich, zu Auslegerschwingungen bei einer Erregerfrequenz f_{exc}, so angeregt, daß es sich im sogenannten Nutzmode, um die Längsachse L des Meßwandlers oszillierend, im wesentlichen gemäß einer natürlichen ersten Eigenschwingungsform ausbiegt. Infolgedessen führt also das Meßrohr 10 im Betrieb zumindest zeitweise Biegeschwingungen relativ zu Gegenschwinger 20 und Längsachse L aus. Gleichzeitig wird auch der Gegenschwinger 20 zu Auslegerschwingungen angeregt, und zwar so, daß er zumindest anteilig außerphasig, insb. im wesentlichen gegenphasig, zum im Nutzmode schwingenden Meßrohr 10 oszilliert. Im besonderen werden Meßrohr 10 und Gegenschwinger 20 dabei so angeregt, daß sie im Betrieb zumindest zeitweise und zumindest anteilig gleichfrequente, jeoch im wesentlichen gegenphasige Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind. Anders gesagt, Meßrohr 10 und Gegenschwinger 20 bewegen sich dann nach der Art von gegeneinander schwingenden Stimmgabelzinken. Nach einer weiteren Ausgestaltung der Erfindung, ist die Erreger- oder auch Nutzmodefrequenz, f_{exc}, dabei so eingestellt, daß sie möglichst genau einer, insb. niedrigsten natürlichen Eigenfrequenz des Meßrohrs 10 entspricht. Bei einer Verwendung eines aus Edelstahl gefertigten Meßrohrs mit einer Nennweite von 29 mm, einer Wandstärke von etwa 1,5 mm, einer gestreckten Länge von etwa 420 mm und einer gesehnten Länge von 305 mm gemessen vom Einlaßend #11 zum Auslaßende 12# ist, würde die niedrigste Resonanzfrequenz desselben beispielsweise bei einer Dichte von praktisch Null, z.B. bei vollständig mit Luft gefülltem Meßrohr, in etwa 490 Hz betragen. In vorteilhafter Weise ist ferner vorgesehen, daß auch eine niedrigste natürliche Eigenfrequenz, f₂₀, des Gegenschwingers 20 in etwa gleich der niedrigsten natürlichen Eigenfrequenz, f₁₀, des Meßrohrs und insoweit auch in etwa gleich der Erregerfrequenz, f_{exc}, ist.

Zum Erzeugen mechanischer Schwingungen des Meßrohrs 10 und des Gegenschwingers 20 umfaßt der Meßwandler ferner eine, insb. elektrodynamische, Erregeranordnung 40. Diese dient dazu, eine, beispielsweise von einer im Elektronikgehäuse 200 untergebrachte nichtdargestellten Steuer-Elektronik des oben genannten Coriolis-Massedurchflußmessers eingespeiste, elektrische Erregerenergie E *_{exc}*, z.B. mit einem geregelten Strom und/oder einer geregelten Spannung, in eine auf das Meßrohr 10, z.B. pulsförmig oder harmonisch, einwirkende und dieses in der vorbeschriebenen Weise auslenkende Erregerkraft *F_{exc}* umzuwandeln. Für das Einstellen der Erregerenergie *E_{exc}*geeignete Steuer- geeigneteSteuer- Steuer-Elektroniken z.B. in der US-A 47 77 833, der US-A 48 01 897, der 48 79 911 oder der US-A 50 09 109 gezeigt. Die Erregerkraft *F_{exc}* kann, wie bei derartigen Meßwandlern üblich, bidirektional oder unidirektional ausgebildet sein und in der dem Fachmann bekannten Weise z.B. mittels einer Strom-und/oder Spannungs-Regelschaltung hinsichtlich ihrer Amplitude und, z.B. mittels einer Phasen-Regelschleife, hinsichtlich ihrer Frequenz eingestellt werden. Als Erregeranordnung 40 kann z.B. eine einfache Tauchspulenanordnung mit einer am Gegenschwinger 20 befestigten zylindrischen Erregerspule, die im Betrieb von einem entsprechenden Erregerstrom durchflossen ist, und einem in die Erregerspule zumindest teilweise eintauchenden dauermagnetischen Anker dienen, der von außen, insb. mittig, am Meßrohr 10 fixiert ist. Ferner kann als Erregeranordnung 40 z.B. auch ein Elektromagnet dienen.

Zum Detektieren von Schwingungen des Meßrohrs 10 umfaßt der Meßwandler außerdem eine Sensoranordnung 50. Als Sensoranordnung 50 kann praktisch jede der für derartige Meßwandler üblichen Sensoranordnungen verwendet werden, die Bewegungen des Meßrohrs 10, insb. einlaßseitig und auslaßseitig, erfaßt und in entsprechende Sensorsignale umwandelt. So kann die Sensoranordnung 50 z.B. in der dem Fachmann bekannten Weise, mittels eines einlaßseitig am Meßrohr 10 angeordneten ersten Sensors 51 und mittels eines auslaßseitigen am Meßrohr 10 angeordneten zweiten Sensors 52 gebildet sein. Als Sensoren können z.B. die Schwingungen relativ messende, elektrodynamische Geschwindigkeitssensoren oder aber auch elektrodynamische Wegsensoren oder Beschleunigungssensoren verwendet werden. Alternativ oder in Ergänzung zu den elektrodynamischen Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen.
verwendet werden. Falls erforderlich, können ferner in der dem Fachmann bekannten Weise noch weitere für die Messung und/oder den Betrieb des Meßwandlers benötigte Sensoren, wie z.B. am Gegenschwinger 20 und/oder am Wandlergehäuse 100 angeordnete zusätzliche Schwingungssensoren, vgl. hierzu auch die US-A 57 36 653, oder z.B. auch am Meßrohr 10, am Gegenschwinger 20 und/oder am Wandlergehäuse 100 angeordnete Temperatursensoren vorgesehen sein, vgl. hierzu auch die US-A 47 68 384 oder die WO-A 00/102816.

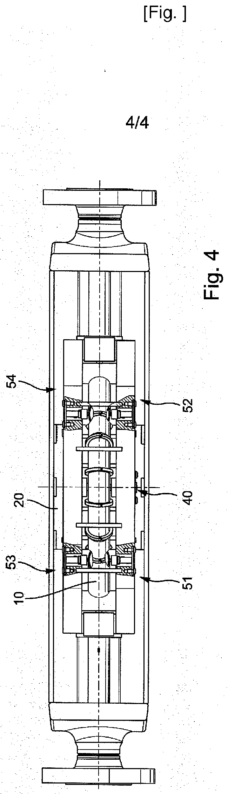

Zur weiteren Verbesserung der Signalqualität der von der Sensoranordnung gelieferten Sensorsignale und/oder zur Gewinnung zusätzlicher Schwingungsinformationen ist nach einer Weiterbildung der Erfindung ferner vorgesehen, zusätzlich zu den beiden Bewegungs- oder auch Schwingungssensoren 51, 52 zwei weitere auf Bewegungen des Meßrohrs reagierende Schwingungssensoren 53, 54 am Meßrohr 10 anzuordnen, so daß also die Sensoranordnung 50, wie auch in Fig. 4 schematisch dargestellt, mittels wenigstens vier solcher Sensoren gebildet ist. Dabei sind ein dritter Sensor 53 ebenfalls einlaßseitig am Meßrohr 10 und ein vierter Sensor 54 ebenfalls auslaßseitig am Meßrohr 10 plaziert. Gemäß einer Ausgestaltung dieser Weiterbildung der Erfindung ist ferner vorgesehen, den dritten Sensor 53 im Bereich des ersten Sensors 51, insb. auf der gegenüberliegenden Seite des Meßrohrs 10, und den vierten Sensor 54 im Bereich des zweiten Sensors 52, insb. auf der gegenüberliegenden Seite des Meßrohrs 10 anzuordnen. Für den in Fig. 4 dargestellten Fall, daß jeweils die beiden einlaßseitigen Sensoren 51, 53 und die beiden auslaßseitigen Sensoren 52, 54 *vis-a-vis,* also einander direkt gegenüber liegend und in Schwingungsrichtung gesehen miteinander fluchtend, am Meßrohr 10 angeordnet sind, kann somit, insb. bei serieller Verschaltung der beiden jeweils gegenüberliegenden Sensoren 51, 53 bzw. 52, 54, durch einen vergleichsweise geringen Mehraufwand bei der Realisierung der Sensoranordnung 50 für davon gelieferten Schwingungsmeßsignalen u.a. eine erhebliche, nutzbringende Verbesserung im Signalzu-Rauschverhältnis erzielt werden. Zur Vereinfachung des sowohl des Aufbaus der Sensoranordnung 50 als auch der Auswertung der davon gelieferten Schwingunsgmeßsignale, ist gemäß einer weiteren Ausgestaltung zudem ferner vorgesehen, die die Sensoranordnung 50 bildenden Schwingungssensoren im wesentlichen baugleich auszubilden.

Für den betriebsmäßig vorgesehenen Fall, daß das Medium in der Rohrleitung strömt und somit der Massedurchfluß *m* von Null verschieden ist, werden mittels des in oben beschriebener Weise vibrierenden Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben im wesentlichen gemäß einer natürlichen zweiten Eigenschwingungsform. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß *m* abhängig. Als zweite Eigenschwingungsform kann, wie bei deratigen Meßwandlern mit gekrümmtem Meßrohr üblich, z.B. die Eigenschwingungsform des anti-symmetrischen Twistmodes, also jene, bei der das Meßrohr 10, wie bereits erwähnt, auch Drehschwingungen um eine senkrecht zur Längsachse L ausgerichteten, gedachten Hochachse H ausführt, die in einer einzigen Symmetrieebene des gezeigten Meßwandlers liegt.

Für den durchaus üblichen und insoweit zu erwartenden Fall, daß sich im Betrieb die Dichte des im Meßrohr strömenden Mediums und damit einhergehend sich auch die Massenverteilung im Innenteil erheblich ändert, ist das Kräftegleichgewicht zwischen dem vibrierenden Meßrohr 10 und dem in der oben beschriebenen Weise gleichsam vibrierenden Gegenschwinger 20 gestört. Wenn die daraus resultierend im Innenteil gleichfrequent mit den Schwingungen des Meßrohrs 10 wirkenden Querkräfte nicht kompensiert werden können, würde das an den beiden Verbindungsrohrstücken 11, 12 aufgehängte Innenteil lateral aus einer zugewiesenen statischen Einbaulage ausgelenkt. Auf diese Weise können Querkräfte via Verbindungsrohrstücke 11, 12, über die das Meßrohr 10 - wie bereits erwähnt - im Betrieb mit der Rohrleitung kommuniziert, zumindest zum Teil auch auf die angeschlossenen Rohrleitung wirken und diese wie auch das In-Line-Meßgerät als solches in unerwünschter Weise somit gleichfalls vibrieren lassen. Des weiteren können derartige Querkräfte auch dazu führen, daß das Meßrohr 10, aufgrund einer aus schwingungstechnischer Sicht ungleichmäßigen Aufhängung des Innenteils oder auch des gesamten Meßwandlers, bedingt z.B. durch praktisch unvermeidliche Fertigungstoleranzen, zusätzlich zu gleichfrequenten Störschwingungen, beispielsweise zusätzlichen Auslegerschwingungen gemäß der zweiten Eigenschwingungsform, angeregt wird, die dann, insb. aufgrund gleicher Schwingungsfrequenz, vom eigentlichen Coriolismode sensorisch praktisch nicht mehr unterscheidbar wären.

Neben den lateralen Störschwingungen kann das im Wandlergehäuse aufgehängte Innenteil zudem auch Pendelschwingungen um die Längsachse L ausführen, bei den die Kopplungszonen um die Längsachse verdreht und die Verbindungsrohrstücke 11, 12 verdrillt werden. In entsprechender Weise erfahren auch die beiden Kopplungszonen und somit auch beiden Koppler 31, 32 eine entsprechende torsionale Verdrehung um die Längsachse L, d.h auch sie oszillieren, und zwar zueinander im wesentlichen gleichphasig. Anders gesagt, weist das im Wandler-Gehäuse schwingfähig gehalterte Innenteil einen Pendelschwingungsmode auf, in dem es im Betrieb, einhergehend mit Verformungen der beiden Verbindungsrohrstücke 11, 12, zumindest zeitweise um die gedachte Längsachse L pendelt. Dabei führen das vibrierende Meßrohr 10 und der Gegenschwinger 20 zusätzlich gemeinsame Pendelbewegungen um die Längsachse L aus, die zumindest bei ruhendem Medium zueinander und zu den Auslegerschwingungen des Meßrohrs 10Gegenschwingers 20 im wesentlichen gleichphasig sind, falls eine Masse, m₂₀, des Gegenschwingers 20 kleiner als eine momentane Gesamtmasse des Medium führenden Meßrohrs 10 ist. Für den umgekehrten Fall, daß die Gesamtmasse des Medium führenden Meßrohrs 10 kleiner als die Masse des Gegenschwingers 20 ist, können diese Pendelbewegungen des Innenteils gleichphasig zu den Auslegerschwingungen des Gegenschwingers 20Meßrohrs 10 ausgebildet sein.

Umgekehrt weist aber das im Wandlergehäuse 100 schwingfähig aufgehängte Innenteil selbst wenigstens einen überwiegend von der Biege-Federsteifigkeit der Verbindungsrohrstücke 11, 12 sowie seiner momentanen Gesamtmasse bestimmten natürlichen Lateralschwingungsmode auf. In diesem Lateralschwingungsmode würde das Innenteil im Betrieb, einhergehend mit entsprechenden, als Verbiegungen ausgebildete Verformungen der beiden Verbindungsrohrstücke 11, 12, relativ zum Wandler-Gehäuse 100 und lateral um die Längsachse L in Resonanz schwingen, sofern es entsprechend angestoßen wird. Gleichermaßen weist das Innenteil auch wenigstens einen überwiegend von der Torsions-Federsteifigkeit der Verbindungsrohrstücke 11, 12 sowie einem momentanen Gesamtträgheitsmoment um die Längsachse L bestimmten natürlichen Pendelschwingungsmode auf, in dem es im Betrieb, einhergehend mit entsprechenden, als Verdrillungen ausgebildete Verformungen der beiden Verbindungsrohrstücke, um die gedachte Längsachse L in Resonanz pendeln wird, sofern es entsprechend angestoßen würde.

Erfreulicherweise können, wie bereits in der US-B 66 66 098 diskutiert, die potentiell auch den Lateralschwingungsmode des Innenteils anstoßenden residualen Querkräfte durch geeignete Abstimmung der Verbindungsrohrstücke 11, 12 und des Innenteils weitestgehend in viel weniger kritische Pendelschwingungen des gesamten Innenteils um die Längsachse L transformiert werden und insoweit die eher schädlichen Lateralschwingungen des Innenteils weitgehend vermieden werden. Dafür sind lediglich eine natürlich Eigenfrequenz, f₁, des einlaßseitig mittels des Verbindungsrohrstücks 11 und des praktisch die einlaßseitige Kopplungszone 11# definierenden Kopplers 31 gebildeten ersten Torsionsschwingers und eine natürlich Eigenfrequenz, f₂, des auslaßseitig mittels des Verbindungsrohrstücks 12 und des praktisch die auslaßseitige Kopplungszone 11# definierenden Kopplers 32 gleichermaßen gebildeten zweiten Torsionsschwingers so durch entsprechende Dimensionierung der beiden Verbindungsrohrstücke 11, 12 sowie der beiden Koppler 31, 32 einzustellen, daß die beiden Eigenfrequenzen, f₁, f₂, in etwa gleich der Erregerfrequenz, f_{exc}, sind, auf der das Meßrohr 10 zumindest überwiegend schwingt, vgl. hierzu auch die US-B 66 66 098. Infolge von allfällige Pendelschwingungen des Innenteils auf der Nutzfrequenz, f_{exc}, werden die beiden vorgenannten Torsionsschwinger dann gleichermaßen um die Längsachse L torsions-schwingen gelassen. Zum Einstellen der Eigenfrequenzen , f₁, f₂, sind ein wenigstens mittels des des Kopplers 31 eingestelltesein - hier im wesentlichen mittels wenigstens des Kopplers mittels des einlaßseitigen Kopplers 31 bereitgestelltes - einlaßseitiges Massenträgheitsmoment um die Längsachse L und eine Torsionssteifigkeit des zugehörigen Verbindunsgrohrstücks 11 sowie ein - hier im wesentlichen mittels des Kopplers 32 bereitgestelltes - auslaßseitiges Massenträgheitsmoment um die Längsachse L, 32 ein Massenträgheitsmoment um die Längsachse A₁ und eine Torsionssteifigkeit des auslaßseitigen Verbindungsrohrstücks 12 entsprechend aufeinander abzustimmen. Bei dem hier gezeigten Meßwandler sind neben den Knottenplatten und den endseitig jeweils überstehenden Plattenenden außerdem auch jene zwischen den beiden jeweiligen Knotenplatten der Koppler 31, 32 verlaufenden, Rohrsegmente bei der Dimensionierung des Massenträgheitsmoments für die Abstimmung des einlaßseitigen Torsionseigenmodes entsprechend zu berücksichtigen.

Aufgrund einer Abstimmung von Nutzmode und Torsionseigenmode in der beschriebenen Weise wird erreicht, daß das Innenteil, das im Betrieb gleichfrequent mit dem bei der Erregerfrequenz f_{exc} schwingenden Meßrohr 10 pendelt, praktisch genau den einlaßseitigen und den auslaßseitigen Torsionsschwinger in einem intrinsischen Eigenmode anstößt. Für diesen Fall, setzen die beiden, auf ihrer jeweiligen Eigenfrequenz f₁ bzw. f₂ und zwangsläufig auch gleichphasig mit dem Innenteil schwingenden Torsionsschwinger dessen Torsionsschwingungen praktische keine oder nur noch sehr geringe Gegenmomente entgegen. Somit ist das Innenteil im Betrieb so drehweich gelagert, daß es praktisch als von den beiden Verbindungsrohrstücken 11, 12 schwingungstechnisch völlig entkoppelt angesehen werden kann. Aufgrund der Tatsache, daß das Innenteil trotz einer praktisch vollständigen Entkopplung im Betrieb um die Längsachse L pendelt und nicht rotiert, kann folglich auch kein Gesamtdrehimpuls des Innenteils existieren. Dadurch aber sind auch ein vom Gesamtdrehimpuls, insb. bei ähnlichen Massenverteilungen im Meßrohr 10 und im Gegenschwinger 20, nahezu direkt abhängiger lateraler Gesamtimpuls und somit auch von diesem abgeleitete, laterale Querkräfte, die vom Innenteil nach außen übertragen werden können, ebenfalls praktisch gleich null. Für den angestrebten Fall also, daß das Pendeln des Innenteils im Bereich der jeweiligen momentanen Eigenfrequenz der beiden Torsionsschwinger erfolgt, pendeln das Meßrohr 10 zusammen mit dem Gegenschwinger praktisch frei von Querkräften und Torsionsmomenten um die Längsachse L. Insoweit führen bei diesem Balance- oder auch Entkopplungsmechanismus dichteabhängige Unbalancen überwiegend zu Änderungen von Schwingungsamplituden lediglich der Pendelschwingungen des Innenteils, jedoch allenfalls zu vernachlässigbar geringen lateralen Verschiebungen desselben aus der ihm zugewiesenen statischen Einbaulage. Infolgedessen können der Meßwandler innerhalb eines vergleichsweise weiten Arbeitsbereichs weitgehend unabhängig von der Dichte r des Fluids dynamisch ausbalanciert werden und so dessen Empfindlichkeit auf intern erzeugte Querkräfte erheblich verringert werden.

Um darüber hinaus eine möglichst robuste Entkopplung des Innenteils des Meßwandlers auch von Störeinkopplungen seitens des Meßrohrs 10 zu realisieren, insb. auch um sicherzustellen, daß das Innenteil selbst möglichst ausschließlich infolge des wirkenden Entkopplungsmechanismus und möglichst nicht infolge von der Anregungen anderen Eigenresonanzen zu pendeln beginnt, ist gemäß einer weiteren Ausgestaltung der Erfindung vorgesehen, daß zumindest eine natürliche Eigenfrequenz von dessen Pendelschwingungsmode kleiner ist als eine niedrigste Schwingungsfrequenz ist, mit der das Meßrohr 10 momentan vibrieren gelassen ist, beispielsweise also der Nutzfrequenz, f_{exc}. Dafür ist das Innenteil ferner so ausgebildet, daß zumindest eine niedrigste momentane natürliche Eigenfrequenz des Pendelschwingungsmods des Innenteils stets kleiner ist als die momentan niedrigste natürliche Eigenfrequenz des Meßrohrs 10 ist.

Infolgedessen, daß der in der vorgeschlagenen Weise implementierten Entkopplungsmechanismus im wesentlichen auf einer eher konstruktiven, im Betrieb von extern praktisch nicht zu ändernden Abstimmung der vorgenannten Torsionsschwinger und des Innenteils beruht, ist naturgemäß durchaus eine, wenn auch im Vergleich zu herkömmlichen Meßwandlern ohne den vorbeschriebenen Entkopplungsmechanismus sehr geringe Verstimmung aufgrund sich ändernder Mediumseigenschaften, zu erwarten. Diese für die Abstimmung relevanten Parameter können neben der Dichte beispielsweise die Viskosität des Mediums und/oder dessen Temperatur und damit einhergehend die des Innenteils selbst sein. Um auch für solche Fälle einen möglichst gut ausbalancierten Meßwandler bereitstellen zu können, ist nach einer weiteren Ausgestaltung der Erfindung vorgesehen, das Innenteil so zu dimensionieren, daß eine natürliche Eigenfrequenz von dessen Pendelschwingungsmode kleiner ist als eine niedrigste Schwingungsfrequenz ist, mit der das Meßrohr 10 momentan vibriert, oder daß zumindest eine momentane natürliche Eigenfrequenz des Pendelschwingungsmodes des Innenteils stets kleiner ist als eine momentan niedrigste natürliche Eigenfrequenz des Meßrohrs 10. Es hat sich hierbei gezeigt, daß ein Verhältnis der niedrigsten Eigenfrequenz des Meßrohrs 10 zur niedrigsten Eigenfrequenz des Pendelschwingungsmodes des Innenteils größer als 3 sein sollte, umgekehrt nicht größer zu sein braucht als 20. Es hat sich hierbei ferner gezeigt, daß es für die meisten Anwendungsfälle ausreichend sein kann, dieses Verhältnis der niedrigsten Eigenfrequenz des Meßrohrs 10 zur niedrigsten Eigenfrequenz des Pendelschwingungsmodes des Innenteils in einem vergleichsweise schmalen Arbeitsbereich etwa zwischen 5 und 10 zu halten.

Gemäß der Erfindung sind das Innenteil und die beiden Verbindungsrohrstücke 11, 12 so aufeinander abgestimmt, daß der Lateralschwingungsmode des Innenteils eine niedrigste Eigenfrequenz aufweist, die größer ist als eine niedrigste Eigenfrequenz des Pendelschwingungsmode des Innenteils. Im besonderen ist vorgesehen, dabei das Innenteil und die beiden Verbindungsrohrstücke 11, 12 so aufeinander abzustimmen, daß ein Verhältnis der niedrigsten Eigenfrequenz des Lateralschwingungsmodes des Innenteils zur niedrigsten Eigenfrequenz des Pendelschwingungsmodes des Innenteils größer als 1,2. Ferner ist vorgesehen, dieses Verhältnis der niedrigsten Eigenfrequenz des Lateralschwingungsmodes des Innenteils zur niedrigsten Eigenfrequenz des Pendelschwingungsmodes des Innenteils so zu trimmen, daß es kleiner als 10 ist. Es hat sich hierbei ferner gezeigt, daß es für die meisten Anwendungsfälle ausreichend sein kann, dieses Verhältnis der niedrigsten Eigenfrequenz, f_{L}, des Lateralschwingungsmodes des Innenteils zur niedrigsten Eigenfrequenz, f_{P}, des Pendelschwingungsmodes des Innenteils in einem vergleichsweise schmalen Arbeitsbereich etwa zwischen 1,5 und 5 zu halten.

Gemäß einer weiteren Ausgestaltung der Erfindung ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L verlaufen sowie zu dieser und zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Gemäß einer Ausgestaltung der Erfindung ist des weiteren vorgesehen, daß als ein Kompromiß zwischen optimaler Federwirkung einerseits und akzeptablen Einbaumaßen des Meßwandlers anderseits eine Länge jedes der Verbindungsrohrstücke 11, 12 jeweils höchstens einem 0,5-fachen eines kürzesten Abstandes zwischen den beiden Kopplungszonen 11#, 12# entspricht. Um einen möglichst kompakten Meßwandler bereitstellen zu können weist jedes der beiden Verbindungsrohrstück 11, 12 im besonderen eine Länge auf, die jeweils kleiner als ein 0,4-faches des kürzesten Abstandes zwischen den beiden Kopplungszonen ist.

Zur Verbesserung des vorbeschriebenen Entkopplungsmechanismus ist der Gegenschwinger 20 gemäß der Erfindung wesentlich schwerer ausgelegt als das Meßrohr 10. Gemäß der Erfindung ist dabei ein Verhältnis der Masse, m₂₀, des Gegenschwingers 20 zu einer Masse, m₁₀, des Meßrohrs 10 größer als 2 eingestellt. Im besonderen sind Meßrohr 10 und Gegenschwinger 20 ferner so ausgebildet, daß letzterer eine Masse, m₂₀, aufweist, die auch größer ist, als eine Masse des mit zu messenden Medium gefüllten Meßrohrs 10 ist. Damit der Gegenschwinger 20 trotz seiner vergleichsweise hohen Masse, m₂₀, eine Eigenfrequenz aufweist, die in etwa der im Nutzmode angeregte Eigenfrequenz des Meßrohrs oder zumindest in deren Bereich angesiedelt ist, ist der Gegenschwinger 20 zumindest bei dieser Ausgestaltung der Erfindung ferner so ausgebildet, daß er in entsprechender Weise gleichermaßen biegesteifer ist als das Meßrohr 10.

Zur Realisierung des, insb. auch eher schwer, gleichsam aber auch eher biegesteif ausgebildeten, Gegenschwingers 20 und zur vereinfachten Abstimmung desselben auf Meßrohr 10 und/oder die endseitigen Torsionsschwinger in der vorbeschriebenen Weise ist ferner vorgesehen, daß der Gegenschwinger 20 zumindest anteilig mittels seitlich des Meßrohrs 10 angeordneter Platten 21, 22 gebildet ist. Bei dem hier gezeigten Ausführungsbeispiel ist der Gegenschwinger 20 mittels wenigstens zweier gekrümmter Gegenschwinger-Platten 21, 22 gebildet, von denen eine erste Gegenschwinger-Platte 21 linksseitig des Meßrohrs 10 und eine zweite Gegenschwinger-Platte 22 rechtsseitig des Meßrohrs 10 angeordnet sind. Jede der wenigstens zwei - hier im wesentlichen bogen- oder bügelartig ausgebildeten - Gegenschwinger-Platten 21, 22 weist eine äußere Seitenfläche auf, von der ein erster Rand durch eine bezüglich der Längsachse distale Kontur gebende Kante sowie ein zweiter Rand von einer bezüglich der Längsachse proximale Kontur gebende Kante gebildet ist. Im hier gezeigten Ausführungsbeispiel ist zudem jede der wenigstens zwei den Gegenschwinger 20 bildenden Gegenschwinger-Platten 21, 22 im wesentlichen parallel zum Meßrohr 10 angeordnet. Gemäß einer weiteren Ausgestaltung der Erfindung ist jede der wenigstens zwei Gegenschwinger-Platten 21, 22 desweiteren so ausgebildet und so im Meßwandler relativ zum Meßrohr 10 plaziert, daß sowohl die distale als auch die proximale Kontur gebende Kante eines jeden der wenigstens zwei Gegenschwinger-Platten 21, 22 zumindest im Bereich eines Mittelabschnitts des Gegenschwingers 20 einen von Null verschiedenen Abstand zur Längsachse L aufweisen.

Wie auch in Fig. 2 und 3 dargestellt, ist ferner jede der wenigstens zwei Gegenschwinger-Platten 21, 22 so ausgebildet, daß zumindest im Bereich eines Mittelabschnitts des Gegenschwingers 20 eine örtliche Platten-Höhe jeweils kleiner ist als jeweils im Bereich der beiden Kopplungszonen. Die örtliche Platten-Höhe entspricht dabei jeweils einem kleinsten Abstand, der an einem ausgewählten Ort der entsprechenden Gegenschwinger-Platten daselbst zwischen der distalen und der proximalen Kontur gebende Kante einer jeden der wenigstens zwei Gegenschwinger-Platten 21, 22 gemessen ist. Gemäß einer Weiterbildung der Erfindung weist jede der wenigstens zwei Gegenschwinger-Platten 21, 22 zudem im Bereich des Mittelabschnitts des Gegenschwingers 20 eine kleinste Platten-Höhe auf. Ferner ist vorgesehen, daß die Platten-Höhe einer jeden der wenigstens zwei Gegenschwinger-Platten 21, 22 jeweils ausgehend von einer Kopplungszone zum Mittelabschnitt des Gegenschwingers 20 hin, insb. monoton oder kontinuierlich, abnimmt.

Gemäß der Erfindung, weist jede der wenigstens zwei den Gegenschwinger 20 bildenden Platten 21, 22 eine im wesentlichen bügelförmige Kontur oder Silhouette auf. In entsprechender Weise ist eine zwischen einer bezüglich der Längsachse L distalen Konturlinie sowie einer bezüglich der Längsachse proximalen Konturlinie imaginär verlaufende Schwerelinie einer jeden der wenigstens zwei Gegenschwinger-Platten 21, 22 gleichermaßen gekrümmte ausgebildet. Aufgrund der Bügelform des Gegenschwingers 20 weist die Schwerelinie einer jeden der wenigstens zwei Gegenschwinger-Platten 21, 22 zumindest im Bereich eines Mittelabschnitts bezüglich der Längsachse einen konkaven Verlauf und zumindest im Bereich der Kopplungszonen bezüglich der Längsachse jeweils einen konvexen Verlauf auf.

Meßrohr 10 und Gegenschwinger 20 sind, wie bereits erwähnt, in ggf. so auszuführen, daß sie bei einer möglichst ähnlichen äußeren Raumform auch gleiche oder zumindest einander ähnliche Massenverteilungen aufweisen. Gemäß einer weiteren Ausgestaltung der Erfindung ist daher vorgesehen, daß die den Gegenschwinger 20 bildenden Gegenschwinger-Platten 21, 22 und insoweit auch der Gegenschwinger 20 selbst im wesentlichen eine mit dem gekrümmten Meßrohr vergleichbare oder zumindest ähnliche Bogenform aufweisen. Gleichermaßen ist auch die Schwerelinie eines jeden der wenigstens zwei Gegenschwinger-Platten 21, 22 zumindest im Bereich eines Mittelabschnitts des Gegenschwingers 20 im wesentlichen gleichermaßen bogenförmig ausgebildet, wie die des Meßrohrs 10. Dementsprechend zeigen die den Gegenschwinger 20 bildenden Gegenschwinger-Platten 21, 22 und somit sowohl der Gegenschwinger 20 als auch das gesamte Innenteil im hier gezeigten Ausführungsbeispiel eine im wesentlichen U-förmig oder V-förmig gekrümmte Silhouettte. Gleichermaßen ist im Ausführungsbeispiel auch die Schwerelinie eines jeden der wenigstens zwei Gegenschwinger-Platten 21, 22 zumindest im Bereich eines zwischen den beiden Kopplungszonen gelegenen Mittelabschnitts des Gegenschwingers 20 im wesentlichen U- oder V-förmig ausgebildet. Gemäß einer weiteren Ausgestaltung sind die Gegenschwinger-Platten 21, 22 ferner so geformt und bezüglich des Meßrohrs 10 angeordnet, daß die Schwerelinie eines jeden der wenigstens zwei Gegenschwinger-Platten 21, 22 im wesentlichen parallel zur Schwerelinie des Meßrohrs 10 ist, die imaginär innerhalb von dessen Lumen verläuft.

Durch eine Kombination von bügelförmiger Kontur des Gegenschwingers 20 einerseits und der sich zur Mitte hin verjüngenden Plattenhöhe anderseits können der Gegenschwinger 20 und insoweit auch das Innenteil sehr einfach sowohl hinsichtlich der Massenverteilungen, insb. der relativen Lage der Massenschwerpunkte M₁₀, M₂₀, als auch davon weitgehend unabhängig hinsichtlich der oben genannten Eigenfrequenzen, f₂₀, f_{L}, f_{P} eingestellt werden. Darüber hinaus kann so auch der mittels der endseitigen Torsionsschwinger realisierte Entkopplungsmechanismus von den vorgenannten Kriterien weitgehend unabhängig abgestimmt werden, da einerseits zwar die überstehenden Enden der Gegenschwinger-Platten zusammen mit den verwendeten Knotenplatten den überwiegenden Beitrag zum erforderlichen Massenträgheitsmoment leisten und anderseits aber deren Höhe jeweils in weiten Grenzen passend gewählt werden kann, ohne die vorgenannten anderen Schwingungseigenschaften des Gegenschwingers 20 wesentlich zu beeinflussen.

Es hat sich ferner gezeigt, daß bei Meßwandlern der beschriebenen Art, insb. auch bei der Realisierung des vorbeschriebenen Entkopplungsmechanismus, nicht nur die drehweiche mechanische Ankopplung des Innenteils an das Wandlergehäuse und die angeschlossene Rohrleitung von Bedeutung ist. Überraschender Weise kommt es im besonderen auch darauf an, daß im Betrieb jene Momente, die aus der Bewegung des vibrierenden Meßrohrs resultieren, möglichst unter einem gleichen Wirkwinkel in die endseitigen Kopplungszonen jeweils eingeleitet werden, wie jene Momente, die durch den gleichfalls vibrierenden Gegenschwinger erzeugt werden. Allerdings hat sich ferner gezeigt, daß infolge schwankender Mediumsdichte zwischen den Wirkwinkeln durchaus ein erheblicher Winkelversatz auftreten kann.

Um diesen praktisch unvermeidlich schwankenden Winkelversatz möglichst in für den angestrebten Arbeitsbereich vertretbaren Grenzen zu halten sind beim erfindungsgemäßen Meßwandler ferner Meßrohr 10 und Gegenschwinger 20 so ausgebildet und zueinander ausgerichtet, daß sowohl ein von der gedachten Längsachse L beabstandeter Massenschwerpunkt, M₁₀, des Meßrohrs 10 als auch ein von der gedachten Längsachse L beabstandeter Massenschwerpunkt, M₂₀, des Gegenschwingers 20, wie in Fig. 3 schematisch dargestellt, in einem gemeinsamen von der gedachten Längsachse L und dem Meßrohr 10 aufgespannten Bereich des Meßwandlers liegen. Darüber hinaus sind Meßrohr 10 und Gegenschwinger 20 des weiteren so ausgebildet und zueinander aufgerichtet daß zumindest im Ruhezustand der Massenschwerpunkt, M₁₀, des Meßrohrs 10 weiter von der Längsachse L entfernt ist, als der Massenschwerpunkt, M ₂₀, des Gegenschwingers 20. Gemäß einer weiteren Ausgestaltung der Erfindung ist ferner vorgesehen, daß jeder der beiden vorgenannten Massenschwerpunkte, M₁₀, M₂₀, einen Abstand zur gedachten Längsachse L aufweist, der größer als 10% eines zwischen Meßrohr 10 und gedachter Längsachse L meßbaren größten Abstandes ist. Für eine Realisierung des Meßwandlers mit gängigen Einbaumaßen würde dies praktisch bedeuten, daß jeder der Massenschwerpunkte, M₁₀, M₂₀, einen Abstand zur gedachten Längsachse L aufweist, der größer als 30 mm ist. Ferner hat es sich gezeigt, daß ein Verhältnis des Abstands eines jeden der Massenschwerpunkte, M₁₀, M₂₀, zum Durchmesser des Meßrohrs 10 jeweils größer als eins, insb. mindestens zwei, sein sollte. Ferner konnte herausgefunden werden, daß es von Vorteil sein kann, wenn jeder der Massenschwerpunkte, M₁₀, M₂₀, einen Abstand zur gedachten Längsachse L aufweist, der kleiner als 90% des größten Abstandes zwischen Meßrohr 10 und gedachter Längsachse L aufweist. Gemäß einer weiteren Ausgestaltung der Erfindung ist daher ferner vorgesehen, daß das Verhältnis des Abstands eines jeden der Massenschwerpunkte, M₁₀, M₂₀, zum Durchmesser des Meßrohrs 10 jeweils größer als 2 ist und kleiner als 10 gehalten ist.

Durch die Verlegung der Massenschwerpunkte in der genannten Weise kann der Arbeitsbereich des Meßwandlers, insb. auch im Vergleich zu dem des in der US-B 66 66 098 gezeigten, insoweit deutlich erhöht werden, daß ein zwischen den beiden vorgenannten Wirkwinkeln infolge schwankender Mediumsdichte zwangsläufig eintretender Winkelversatz sowohl negativ als auch positiv ausfallen kann und somit nur etwa halb so große und insoweit vergleichsweise geringe Absolutbeträge annimmt. Somit kann auch die dichteabhängige Nullpunktbeeinflußbarkeit des Meßwandlers erheblich verringert werden.

Um ein möglichst einfach handhabbares Anpassen des Gegenschwingers 20 auf eine am tatsächlichen Meßrohr 10 wirksame Masse und/oder Massenverteilung zu ermöglichen, können dem Gegenschwinger 20 ferner als diskrete Zusatzmassen dienende Massenausgleichskörper 21, insb. lösbar, aufgesetzt sein. Alternativ oder in Ergänzung kann eine entsprechende Massenverteilung über dem Gegenschwinger 20 z.B. auch durch Ausformen von Längs- oder Ringnuten realisiert werden. Eine für die jeweilige Anwendung schlußendlich geeignete Masse und/oder Masseverteilung des Gegenschwingers 20 bzw. des Innenteils können vorab z.B. mittels Finite-Elemente-Berechnungen und/oder mittels entsprechender Kalibriermessungen ohne weiteres ermittelt werden. Die am konkreten Meßwandler zum optimalen Abstimmen der einlaßseitigen und des auslaßseitigen Wirkwinkel dann einzustellenden Parameter, also entsprechende Massen, Massenverteilungen und/oder Massenträgheitsmomente von Meßrohr 10 und Gegenschwinger 20 und daraus abgeleitete geometrische Abmessungen derselben, können z.B. in der dem Fachmann an und für sich bekannten Weise mittels Finiter-Elemente- oder anderer computergestützten Simulationsberechnungen in Verbindung mit entsprechenden Kalibriermessungen ermittelt werden.

Der erfindungsgemäße Meßwandler ist aufgrund seiner guten dynamischen Ausbalancierung besonders für eine Verwendung in einem Coriolis-Massedurchflußmesser, einem Coriolis-Massedurchfluß-/ Dichtemesser oder in einem Coriolis-Massedurchfluß-/ Dichte-/ Viskositätsmesser geeignet, der für Medien mit im Betrieb erheblich schwankender Dichte vorgesehen ist.

## Patentansprüche

1. Meßwandler vom Vibrationstyp für ein in einer Rohrleitung strömendes Medium, welcher Meßwandler umfaßt:
- ein Wandler-Gehäuse sowie
- ein im Wandler-Gehäuse angeordnetes Innenteil, das zumindest
-- ein gekrümmtes, im Betrieb zumindest zeitweise vibrierendes Meßrohr (10) zum Führen des Mediums, sowie
-- einen unter Bildung einer ersten Kopplungszone (11#) einlaßseitig am Meßrohr (10) und unter Bildung einer zweiten Kopplungszone (12#) auslaßseitig am Meßrohr (10) fixierten Gegenschwinger (20) aufweist,
- wobei das Innenteil zumindest mittels zweier Verbindungsrohrstücke (11, 12) im Wandler-Gehäuse schwingfähig gehaltert ist,
-- über die das Meßrohr (10) im Betrieb mit der Rohrleitung kommuniziert, und
-- die zueinander sowie zu einer gedachten Längsachse (L) des Meßwandlers so ausgerichtet sind, daß das Innenteil im Betrieb um die Längsachse (L) pendeln kann, und
- wobei der Gegenschwinger (20) mittels wenigstens zweier Gegenschwinger-Platten (21, 22) gebildet ist, von denen eine erste Gegenschwinger-Platte (21) linksseitig des Meßrohrs (10) und eine zweite Gegenschwinger-Platte (22) rechtsseitig des Meßrohrs (10) angeordnet sind,
**dadurch gekennzeichnet,**
- **daß** jede der wenigstens zwei Gegenschwinger-Platten (21, 22) eine bogen- oder bügelförmige Kontur aufweist,
**daß** der Gegenschwinger (20) eine Masse, m₂₀, aufweist, die größer ist als eine Masse, m₁₀, des Meßrohrs (10), derart, daß ein Verhältnis der Masse, m₂₀, des Gegenschwingers (20) zur Masse, m₁₀, des Meßrohrs (10) größer als 2 ist,
- und **daß** Meßrohr (10) und Gegenschwinger (20) so ausgebildet und zueinander ausgerichtet sind, daß sowohl ein von der gedachten Längsachse (L) beabstandeter Massenschwerpunkt, M₁₀, des Meßrohrs (10) als auch ein von der gedachten Längsachse (L) beabstandeter Massenschwerpunkt, M₂₀, des Gegenschwingers (20) in einem gemeinsamen von der gedachten Längsachse (L) und dem Meßrohr (10) aufgespannten Bereich des Meßwandlers liegen;
weiters **dadurch gekennzeichnet,**
- **daß** das im Wandler-Gehäuse schwingfähig gehalterte Innenteil einen natürlichen Lateralschwingungsmode aufweist, in dem es im Betrieb, einhergehend mit Verformungen der beiden Verbindungsrohrstücke (11, 12), zumindest zeitweise relativ zum Wandler-Gehäuse und lateral um die Längsachse (L) schwingt,
- **daß** das im Wandler-Gehäuse schwingfähig gehalterte Innenteil einen Pendelschwingungsmode aufweist, in dem es im Betrieb, einhergehend mit Verformungen der beiden Verbindungsrohrstücke (11, 12), zumindest zeitweise um die gedachte Längsachse (L) pendelt, wobei der Lateralschwingungsmode des Innenteils eine niedrigste Eigenfrequenz aufweist, die größer ist als eine niedrigste Eigenfrequenz des Pendelschwingungsmode des Innenteils,
- und **daß** ein Verhältnis der niedrigsten Eigenfrequenz des Lateralschwingungsmodes des Innenteils zur niedrigsten Eigenfrequenz des Pendelschwingungsmodes des Innenteils größer als 1,2 ist.

2. Meßwandler nach dem vorherigen Anspruch,
- wobei jede der wenigstens zwei Gegenschwinger-Platten (21, 22) eine äußere Seitenfläche aufweist, von der ein erster Rand durch eine bezüglich der Längsachse distale Kontur gebende Kante sowie ein zweiter Rand von einer bezüglich der Längsachse proximale Kontur gebende Kante gebildet ist,
- wobei jede der wenigstens zwei Gegenschwinger-Platten (21, 22) so ausgebildet und im Meßwandler plaziert ist, daß sowohl die die distale Kontur gebende Kante als auch die die proximale Kontur gebende Kante eines jeden der wenigstens zwei Gegenschwinger-Platten (21, 22) zumindest im Bereich eines Mittelabschnitts des Gegenschwingers (20) einen von Null verschiedenen Abstand zur Längsachse (L) aufweisen, und
- wobei jede der wenigstens zwei Gegenschwinger-Platten (21, 22) so ausgebildet ist, daß zumindest im Bereich des Mittelabschnitts des Gegenschwingers (20) eine örtliche Platten-Höhe jeweils kleiner ist als jeweils im Bereich der beiden Kopplungszonen, wobei die örtliche Platten-Höhe daselbst jeweils einem kleinsten Abstand zwischen der distalen und der proximalen Kontur gebende Kante eines jeden der wenigstens zwei Gegenschwinger-Platten (21, 22) entspricht.

3. Meßwandler nach dem vorherigen Anspruch, wobei jede der wenigstens zwei Gegenschwinger-Platten (21, 22) so ausgebildet ist, daß sie im Bereich des Mittelabschnitts des Gegenschwingers (20) eine kleinste Platten-Höhe aufweist.

4. Meßwandler nach dem vorherigen Anspruch, jede der wenigstens zwei Gegenschwinger-Platten (21, 22) so ausgebildet ist, daß die Platten-Höhe eines jeden der wenigstens zwei Gegenschwinger-Platten (21, 22) jeweils ausgehend von einer Kopplungszone zum Mittelabschnitt des Gegenschwingers (20) hin, insb. monoton oder kontinuierlich, abnimmt.

5. Meßwandler nach einem der vorherigen Ansprüche,
- wobei ein Durchmesser des Meßrohrs (10) größer als 1 mm und kleiner als 100 mm ist; und/oder
- wobei die Längsachse (L) des Meßwandlers die beiden Kopplungszonen (11#, 12#) miteinander imaginär verbindet; und/oder
- wobei das Meßrohr (10) im wesentlichen U-förmig oder V-förmig ausgebildet ist; und/oder
- wobei Meßrohr (10) und Gegenschwinger (20) einlaßseitig mittels wenigstens eines ersten Kopplers (31) und auslaßseitig mittels wenigstens eines zweiten Kopplers (32) miteinander mechanisch verbunden sind; und/oder
- wobei das Meßrohr (10) im Betrieb zumindest zeitweise Biegeschwingungen relativ zu Gegenschwinger (20) und Längsachse (L) ausführt; und/oder
- wobei jede der wenigstens zwei den Gegenschwinger (20) bildenden Platten (21, 22) im wesentlichen parallel zum Meßrohr (10) angeordnet ist; und/oder
- wobei Meßrohr (10) und Gegenschwinger (20) im Betrieb zumindest zeitweise und zumindest anteilig gleichfrequente Biegeschwingungen um die Längsachse (L) ausführen, insb. derart, daß die Biegeschwingungen zumindest anteilig zueinander außerphasig, insb. im wesentlichen gegenphasig, sind.

6. Meßwandler nach einem der vorherigen Ansprüche, wobei die Verbindungsrohrstücke (11, 12) im wesentlichen gerade Rohrsegmente aufweisen.

7. Meßwandler nach dem vorherigen Anspruch,
- wobei die Verbindungsrohrstücke (11, 12) so zueinander ausgerichtet sind, daß die Rohrsegmente im wesentlichen parallel zur gedachten Längsachse (L) verlaufen; und/oder
- wobei die Verbindungsrohrstücke (11, 12) so zueinander ausgerichtet sind, daß die im wesentlichen geraden Rohrsegmente zueinander im wesentlichen fluchten; und/oder
- wobei die Verbindungsrohrstücke (11, 12) so zueinander ausgerichtet sind, daß die im wesentlichen geraden Rohrsegmente mit der gedachten Längsachse (L) im wesentlichen fluchten.

8. Meßwandler nach einem der vorherigen Ansprüche,
- wobei zumindest eine natürliche Eigenfrequenz des Pendelschwingungsmodes kleiner ist als eine niedrigste Schwingungsfrequenz ist, mit der das Meßrohr (10) momentan vibriert; und/oder
- wobei zumindest eine momentane natürliche Eigenfrequenz des Pendelschwingungsmodes stets kleiner ist als eine momentan niedrigste natürliche Eigenfrequenz des Meßrohrs (10).

9. Meßwandler nach einem der vorherigen Ansprüche, wobei das Verhältnis der niedrigsten Eigenfrequenz des Lateralschwingungsmodes des Innenteils zur niedrigsten Eigenfrequenz des Pendelschwingungsmodes des Innenteils kleiner als 10, insb. nämlich größer als 1,5 und kleiner als 5, ist.

10. Meßwandler nach einem der vorherigen Ansprüche,
- wobei zumindest eine natürliche Eigenfrequenz des Pendelschwingungsmodes des Innenteils kleiner ist als eine niedrigste Schwingungsfrequenz ist, mit der das Meßrohr (10) momentan vibriert; und/oder
- wobei zumindest eine momentane natürliche Eigenfrequenz des Pendelschwingungsmodes des Innenteils stets kleiner ist als eine momentan niedrigste natürliche Eigenfrequenz des Meßrohrs (10).

11. Meßwandler nach dem vorherigen Anspruch,
- wobei ein Verhältnis der niedrigsten Eigenfrequenz des Meßrohrs (10) zur niedrigsten Eigenfrequenz des Pendelschwingungsmodes des Innenteils größer als 3 ist; und/oder
- wobei ein Verhältnis der niedrigsten Eigenfrequenz des Meßrohrs (10) zur niedrigsten Eigenfrequenz des Pendelschwingungsmodes des Innenteils kleiner als 20 ist; und/oder
- wobei ein Verhältnis der niedrigsten Eigenfrequenz des Meßrohrs (10) zur niedrigsten Eigenfrequenz des Pendelschwingungsmodes des Innenteils größer als 5 und kleiner als 10 ist.

12. Meßwandler nach einem der vorherigen Ansprüche,
- weiters umfassend eine Erregeranordnung (40) zum Vibrierenlassen von Meßrohr (10) und Gegenschwinger (20); und/oder
- weiters umfassend eine Sensoranordnung (50) zum Erfassen von Schwingungen zumindest des Meßrohrs (10).

13. Meßwandler nach dem vorherigen Anspruch, wobei die Sensoranordnung (50) zum Erfassen von Schwingungen des Meßrohrs (10) wenigstens einen einlaßseitig am Meßrohr (10) angeordneten ersten Sensor (51) sowie einen auslaßseitig am Meßrohr (10) angeordneten zweiten Sensor (53) umfaßt.

14. Meßwandler nach dem vorherigen Anspruch, wobei die Sensoranordnung (50) zum Erfassen von Schwingungen des Meßrohrs (10) weiters wenigstens einen einlaßseitig am Meßrohr (10), insb. gegenüberliegend dem ersten Sensor, angeordneten dritten Sensor (53) sowie einen auslaßseitig am Meßrohr (10), insb. gegenüberliegend dem zweiten Sensor, angeordneten vierten Sensor (54) umfaßt.

15. Verwendung eines Meßwandlers gemäß einem der vorherigen Ansprüche in einem dem Messen eines in einer Rohrleitung strömenden Mediums dienenden, insb. als Coriolis-Massedurchflußmeßgerät, Dichtemeßgerät und/oder Viskositätsmeßgerät ausgebildeten, In-Line-Meßgerät.

## Claims

1. Vibronic-type transducer for a medium flowing through a pipe, said transducer comprising:
- a transducer housing, and
- an interior part arranged in the transducer housing, which has at least
-- a curved measuring tube (10) which vibrates at least temporarily during operation and serves to conduct the medium, and
-- a counter vibration mechanism (20), which is fixed on the measuring tube (10) on the inlet side forming a first coupling zone (11#) and which is fixed on the measuring tube (10) on the outlet side forming a second coupling zone (#12),
- wherein the interior part is supported in the transducer housing in a manner which permits vibration at least by means of two connection pipe pieces (11, 12),
-- via said connection pipe pieces the measuring tube (10) communicates with the pipe during operation, and
-- that are aligned with one another and in relation to an imaginary longitudinal axis (L) of the transducer in such a way that the interior part can oscillate around the longitudinal axis (L) during operation, and
- wherein the counter vibration mechanism (20) is formed by at least two counter vibration plates (21, 22), of which a first counter vibration plate (21) is arranged on the left side of the measuring tube (10) and a second counter vibration plate (22) is arranged on the right side of the measuring tube (10),
**characterized in that**
- each of the at least two counter vibration plates (21, 22) has a contour in the form of an arc or a bracket,
- **in that** the counter vibration mechanism (20) has a mass m₂₀, which is greater than the mass m₁₀ of the measuring tube (10) such that a ratio of the mass m₂₀ of the counter vibration mechanism (20) and the mass m₁₀ of the measuring tube (10) is greater than 2,
- and **in that** the measuring tube (10) and the counter vibration mechanism (20) are designed and aligned with one another in such a way that both a center of gravity, M₁₀, of the measuring tube (10) arranged at a distance from the imaginary longitudinal axis (L) and a center of gravity, M₂₀, of the counter vibration mechanism (20) arranged at a distance from the imaginary longitudinal axis (L) are situated in a common area of the transducer defined by the imaginary longitudinal axis (L) and the measuring tube (10);
**further characterized in that**
- the interior part supported in the transducer housing in a way that permits vibration has a natural lateral mode of, **in that**, during operation, it vibrates at least temporarily in relation to the transducer housing and laterally around the longitudinal axis (L), together with deformations of the two connection pipe pieces (11, 12),
- the interior part supported in the transducer housing in a way that permits vibration has a pendulum mode of vibration, **in that**, during operation, it oscillates at least temporarily around the imaginary longitudinal axis (L), together with deformations of the two connection pipe pieces (11, 12), wherein the lateral mode of vibration of the interior part has a minimum natural frequency that is greater than a minimum natural frequency of the pendulum mode of vibration,
- and **in that** a ratio of the minimum natural frequency of the lateral mode of vibration of the interior part to the minimum natural frequency of the pendulum mode of vibration of the interior part is greater than 1.2.

2. Transducer as claimed in the previous claim,
- wherein each of the at least two counter vibration plates (21, 22) has an outer lateral surface of which a first border is formed by an edge defining a distal contour in relation to the longitudinal axis and a second border is formed by an edge defining a proximal contour in relation to the longitudinal axis,
- wherein each of the at least two counter vibration plates (21, 22) is designed and positioned in the transducer in such a way that both the edge defining the distal contour and the edge defining the proximal contour of each of the at least two counter vibration plates (21, 22) has a distance in relation to the longitudinal axis (L) not equal to zero at least in the area of a central section of the counter vibration mechanism (20), and
- wherein each of the at least two counter vibration plates (21, 22) is designed in such a way that at least in the area of the central section of the counter vibration mechanism (20) a local plate height is smaller in each case than in the area of the two coupling zones, wherein the local plate height corresponds in each case to a minimum distance between the edge defining the distal and proximal contour of each of the at least two counter vibration plates (21, 22).

3. Transducer as claimed in the previous claim, wherein each of the at least two counter vibration plates (21, 22) is designed in such a way that it has a minimum plate height in the area of the central section of the counter vibration mechanism (20).

4. Transducer as claimed in the previous claim, wherein each of the at least two counter vibration plates (21, 22) is designed in such a way that the plate height of each of the at least two counter vibration plates (21, 22) decreases, particularly in a monotonic or continuous manner, starting from a coupling zone and towards the central section of the counter vibration mechanism (20).

5. Transducer as claimed in one of the previous claims,
- wherein a diameter of the measuring tube (10) is greater than 1 mm and less than 100 mm; and/or
- wherein the longitudinal axis (L) of the transducer interconnects the two coupling zones (11#, 12#) in an imaginary manner; and/or
- wherein the measuring tube (10) is essentially U-shaped or V-shaped; and/or
- wherein the measuring tube (10) and the counter vibration mechanism (20) are mechanically interconnected on the inlet side by means of at least a first coupler (31) and on the outlet side by means of at least a second coupler (32); and/or
- wherein, during operation, the measuring tube (10) at least temporarily executes flexural vibrations in relation to the counter vibration mechanism (20) and the longitudinal axis (L); and/or
- wherein each of the at least plates (21, 22) forming the counter vibration mechanism (20) is arranged in a manner that is essentially parallel to the measuring tube (10); and/or
- wherein, during operation, the measuring tube (10) and the counter vibration mechanism (20) at least temporarily and at least partially execute same-frequency flexural vibrations around the longitudinal axis (L), particularly in such a way that the flexural vibrations are at least partially not in phase with one another, particularly in phase opposition to one another.

6. Transducer as claimed in one of the previous claims, wherein the connection pipe pieces (11, 12) essentially have straight pipe segments.

7. Transducer as claimed in the previous claim,
- wherein the connection pipe pieces (11, 12) are aligned with one another in such a way that the pipe segments are essentially parallel to the imaginary longitudinal axis (L); and/or
- wherein the connection pipe pieces (11, 12) are aligned with one another in such a way that the essentially straight pipe segments are essentially in line with one another; and/or
- wherein the connection pipe pieces (11, 12) are aligned with one another in such a way that the essentially straight pipe segments are essentially aligned to the imaginary longitudinal axis (L).

8. Transducer as claimed in one of the previous claims,
- wherein at least a natural frequency of the pendulum vibration mode is less than a minimum vibration frequency at which the measuring tube (10) momentarily vibrates; and/or
- wherein at least a momentary natural frequency of the pendulum vibration mode is always less than a momentary minimum natural frequency of the measuring tube (10).

9. Transducer as claimed in one of the previous claims, wherein the ratio of the minimum natural frequency of the lateral vibration mode of the interior part to the minimum natural frequency of the pendulum vibration mode of the interior part is smaller than 10, particularly greater than 1.5 and less than 5.

10. Transducer as claimed in one of the previous claims,
- wherein at least a natural frequency of the pendulum vibration mode of the interior part is less than a minimum vibration frequency at which the measuring tube (10) momentarily vibrates; and/or
- wherein at least a momentary natural frequency of the pendulum vibration mode of the interior part is always less than a momentary minimum natural frequency of the measuring tube (10).

11. Transducer as claimed in the previous claim,
- wherein a ratio of the minimum natural frequency of the measuring tube (10) to the minimum natural frequency of the pendulum vibration mode of the interior part is greater than 3; and/or
- wherein a ratio of the minimum natural frequency of the measuring tube (10) to the minimum natural frequency of the pendulum vibration mode of the interior part is less than 20; and/or
- wherein a ratio of the minimum natural frequency of the measuring tube (10) to the minimum natural frequency of the pendulum vibration mode of the interior part is greater than 5 and less than 10.

12. Transducer as claimed in one of the previous claims,
- further comprising an exciter arrangement (40) designed to cause the measuring tube (10) and the counter vibration mechanism (20) to vibrate; and/or
- further comprising a sensor arrangement (50) designed to record vibrations at least of the measuring tube (10).

13. Transducer as claimed in the previous claim, wherein the sensor arrangement (50) designed to record vibrations of the measuring tube (10) comprises at least a first sensor (51) arranged on the measuring tube (10) on the inlet side, and a second sensor (53) arranged on the measuring tube (10) on the outlet side.

14. Transducer as claimed in the previous claim, wherein the sensor arrangement (50) designed to record vibrations of the measuring tube (10) further comprises at least a third sensor (53) arranged on the measuring tube (10) on the inlet side, particularly opposite the first sensor, and a fourth sensor (54) arranged on the measuring tube (10) on the outlet side, particularly opposite the second sensor.

15. Use of a transducer as claimed in one of the previous claims in an in-line measuring device for the purposes of measuring a medium flowing in a pipe, particularly one designed as a Coriolis mass flowmeter, density meter and/or viscosity meter.

## Revendications

1. Transducteur du type vibratoire pour un produit s'écoulant dans une conduite, lequel transducteur comprend :
- un boîtier de transducteur, ainsi que
- une partie intérieure disposée dans le boîtier de transducteur, laquelle comporte au moins
-- un tube de mesure (10) coudé, vibrant au moins temporairement en fonctionnement, destiné à guider le produit, ainsi que
-- un contre-vibrateur (20), qui est fixé côté entrée sur le tube de mesure (10) en formant une première zone de couplage (11#) et qui est fixé côté sortie sur le tube de mesure (10) en formant une deuxième zone de couplage (12#)
- la partie intérieure étant maintenue de façon apte à vibrer dans le boîtier de transducteur au moyen de deux éléments de tube de liaison (11, 12),
-- éléments par l'intermédiaire desquels le tube de mesure (10) communique en fonctionnement avec la conduite, et
-- qui sont alignés, l'un par rapport à l'autre et par rapport à un axe longitudinal (L) imaginaire du transducteur, de telle sorte que la partie intérieure puisse osciller en fonctionnement autour de l'axe longitudinal (L), et
- pour lequel le contre-vibrateur (20) est constitué au moins de deux plaques de contre-vibrateur (21, 22), parmi lesquelles une première plaque de contre-vibrateur (21) est disposée sur le côté gauche du tube de mesure (10) et une deuxième plaque de contre-vibrateur (22) est disposée sur le côté droit du tube de mesure (10),
**caractérisé**
- **en ce que** chacune des au moins deux plaques de contre-vibrateur (21, 22) présente un contour en forme d'arc ou d'étrier,
- **en ce que** le contre-vibrateur (20) présente une masse m₂₀, qui est supérieure à une masse m₁₀ du tube de mesure (10), de telle sorte qu'un rapport entre la masse m₂₀ du contre-vibrateur (20) et la masse m₁₀ du tube de mesure (10) est supérieur à 2,
- et **en ce que** le tube de mesure (10) et le contre-vibrateur (20) sont conçus et alignés l'un par rapport à l'autre de telle sorte qu'à la fois un centre de gravité, M₁₀, distant de l'axe longitudinal (L) imaginaire, du tube de mesure (10) et un centre de gravité, M₂₀, distant de l'axe longitudinal (L) imaginaire, du contre-vibrateur (20) se situent dans une zone de transducteur commune définie par l'axe longitudinal (L) imaginaire et le tube de mesure (10) ;
**caractérisé en outre**
- **en ce que** la partie intérieure maintenue de façon apte à vibrer dans le boîtier de transducteur présente un mode de vibration latérale, en ce qu'elle vibre, en fonctionnement, en association avec les déformations des deux éléments de tube de liaison (11, 12), au moins temporairement par rapport au boîtier de transducteur et latéralement autour de l'axe longitudinal (L),
- **en ce que** la partie intérieure maintenue de façon apte à vibrer dans le boîtier de transducteur présente un mode de vibration pendulaire, dans lequel elle oscille, en fonctionnement, en association avec les déformations des deux éléments de tube de liaison (11, 12), au moins temporairement autour de l'axe longitudinal (L) imaginaire, le mode de vibration latérale de la partie intérieure présentant une fréquence propre minimale, qui est supérieure à une fréquence propre minimale du mode de vibration pendulaire de la partie intérieure,
- et **en ce qu'**un rapport entre la fréquence propre minimale du mode de vibration latérale de la partie intérieure et la fréquence propre minimale du mode de vibration pendulaire de la partie intérieure est supérieur à 1,2.

2. Transducteur selon la revendication précédente,
- pour lequel chacune des au moins deux plaques de contre-vibrateur (21, 22) présente une surface latérale extérieure, de laquelle un premier bord est formé par une arête définissant un contour distal par rapport à l'axe longitudinal et un deuxième bord par une arête définissant un contour proximal par rapport à l'axe longitudinal,
- pour lequel chacune des au moins deux plaques de contre-vibrateur (21, 22) est formée et placée dans le transducteur de telle sorte qu'à la fois l'arête définissant un contour distal et l'arête définissant un contour proximal de chacune des au moins deux plaques de contre-vibrateur (21, 22) présente au minimum dans la zone d'une partie centrale du contre-vibrateur (20) une distance différente de zéro par rapport à l'axe longitudinal (L), et
- pour lequel chacune des au moins deux plaques de contre-vibrateur (21, 22) est formée de telle sorte qu'au minimum dans la zone de la partie centrale du contre-vibrateur (20) une hauteur de plaque locale est à chaque fois inférieure à la zone respective des deux zones de couplage, la hauteur de plaque locale correspondant à chaque fois à une distance minimale entre l'arrête définissant le contour distal et proximal de chacune des au moins deux plaques de contre-vibrateur (21, 22).

3. Transducteur selon la revendication précédente, pour lequel chacune des au moins deux plaques de contre-vibrateur (21, 22) est formée de telle sorte qu'elle présente, dans la zone de la partie centrale du contre-vibrateur (20), une hauteur de plaque minimale.

4. Transducteur selon la revendication précédente, chacune des au moins deux plaques de contre-vibrateur (21, 22) étant formée de telle sorte que la hauteur de plaque de chacune des au moins deux plaques de contre-vibrateur (21, 22) diminue à partir d'une zone de couplage en direction de la partie centrale du contre-vibrateur (20), notamment de façon monotone ou continue.

5. Transducteur selon l'une des revendications précédentes,
- pour lequel un diamètre du tube de mesure (10) est supérieur à 1 mm et inférieur à 100 mm ; et/ou
- pour lequel l'axe longitudinal (L) du transducteur relie de façon imaginaire entre elles les deux zones de couplage (11 #, 12#) ; et/ou
- pour lequel le tube de mesure (10) est pour l'essentiel en forme de U ou en forme de V ; et/ou
- pour lequel le tube de mesure (10) et le contre-vibrateur (20) sont reliés mécaniquement entre eux, côté entrée, au moyen d'au moins un premier coupleur (31) et, côté sortie, au moyen d'au moins un deuxième coupleur (32) ; et/ou
- pour lequel le tube de mesure (10) exécute, en fonctionnement, au moins temporairement des vibrations de flexion par rapport au contre-vibrateur et à l'axe longitudinal (L) ; et/ou
- pour lequel chacune des au moins deux plaques (21, 22) formant le contre-vibrateur (20) est disposée pour l'essentiel parallèlement au tube de mesure (10) ; et/ou
- pour lequel le tube de mesure (10) et le contre-vibrateur (20) exécutent, en fonctionnement, au moins temporairement et au moins partiellement des vibrations de flexion de même fréquence autour de l'axe longitudinal (L), notamment de telle sorte que les vibrations de flexion sont au moins partiellement déphasées les unes par rapport aux autres, notamment pour l'essentiel en opposition de phase.

6. Transducteur selon l'une des revendications précédentes, pour lequel les éléments de tube de liaison (11, 12) présentent pour l'essentiel des segments de tube droits.

7. Transducteur selon la revendication précédente,
- pour lequel les éléments de tube de liaison (11, 12) sont alignés l'un par rapport à l'autre de telle sorte que les segments de tube s'étendent pour l'essentiel parallèlement à l'axe longitudinal (L) imaginaire ; et/ou
- pour lequel les éléments de tube de liaison (11, 12) sont alignés l'un par rapport à l'autre de telle sorte que les segments de tube pour l'essentiel droits sont pour l'essentiel affleurants l'un par rapport à l'autre ; et/ou
- pour lequel les éléments de tube de liaison (11, 12) sont alignés l'un par rapport à l'autre de telle sorte que les segments de tube pour l'essentiel droits sont pour l'essentiel affleurants avec l'axe longitudinal (L) imaginaire.

8. Transducteur selon l'une des revendications précédentes,
- pour lequel au moins une fréquence propre naturelle du mode de vibration pendulaire est inférieure à une fréquence de vibration minimale, avec laquelle le tube de mesure (10) vibre momentanément ; et/ou
- pour lequel au moins une fréquence propre naturelle momentanée du mode de vibration pendulaire est constamment inférieure à une fréquence propre naturelle minimale momentanée du tube de mesure (10).

9. Transducteur selon l'une des revendications précédentes, pour lequel le rapport entre la fréquence propre minimale du mode de vibration latérale de la partie intérieure et la fréquence propre minimale du mode de vibration pendulaire de la partie intérieure est de 10, notamment supérieur à 1,5 et inférieur à 5.

10. Transducteur selon l'une des revendications précédentes,
- pour lequel au moins une fréquence propre naturelle du mode de vibration pendulaire de la partie intérieure est inférieure à la fréquence de vibration minimale, avec laquelle le tube de mesure (10) vibre momentanément ; et/ou
- pour lequel au moins une fréquence propre naturelle momentanée du mode de vibration pendulaire de la partie intérieure est constamment inférieure à la fréquence propre naturelle minimale momentanée du tube de mesure (10).

11. Transducteur selon la revendication précédente,
- pour lequel un rapport entre la fréquence propre minimale du tube de mesure (10) et la fréquence propre du mode de vibration pendulaire de la partie intérieure est supérieur à 3 ; et/ou
- pour lequel un rapport entre la fréquence propre minimale du tube de mesure (10) et la fréquence propre du mode de vibration pendulaire de la partie intérieure est inférieur à 20 ; et/ou
- pour lequel un rapport entre la fréquence propre minimale du tube de mesure (10) et la fréquence propre du mode de vibration pendulaire de la partie intérieure est supérieur à 5 et inférieur à 10.

12. Transducteur selon l'une des revendications précédentes,
- comprenant en outre un ensemble excitateur (40) destiné à faire entrer le tube de mesure (10) et le contre-vibrateur (20) en vibrations ; et/ou
- comprenant en outre un ensemble capteur (50) destiné à la mesure des vibrations au moins du tube de mesure (10).

13. Transducteur selon la revendication précédente, pour lequel l'ensemble capteur (50) destiné à la mesure des vibrations du tube de mesure (10) comprend au moins un premier capteur (51) disposé côté entrée sur le tube de mesure, ainsi qu'un deuxième capteur (52) disposé côté sortie sur le tube de mesure (10).

14. Transducteur selon la revendication précédente, pour lequel l'ensemble capteur (50) destiné à la mesure des vibrations du tube de mesure (10) comprend en outre un troisième capteur (53) disposé côté entrée sur le tube de mesure (10), notamment en face du premier capteur, ainsi qu'un quatrième capteur (54) disposé côté sortie sur le tube de mesure (10), notamment en face du deuxième capteur.

15. Utilisation d'un transducteur selon l'une des revendications précédentes dans un appareil de mesure en ligne, notamment conçu sous la forme d'un débitmètre massique Coriolis, d'un densimètre et/ou d'un viscosimètre, destiné à la mesure d'un produit s'écoulant dans une conduite.
